# EUROPEAN PATENT APPLICATION

(11) **EP 4 135 273 A1**
(43) Date of publication of application: **15.02.2023**
(21) Application number: 21813469.0
(22) Date of filing: 20.05.2021
(51) Int. Cl.: H04L 12/721

(54) **ROUTING MANAGEMENT METHOD, DEVICE AND SYSTEM**

(30) Priority: 25.05.2020 CN 202010448666
(71) Applicant: Huawei Technologies Co., Ltd., Shenzhen, Guangdong 518129, (CN)
(72) Inventor: JIN, Chenyu, Shenzhen, Guangdong 518129 (CN); QIN, Shenzu, Shenzhen, Guangdong 518129 (CN); XU, Haijun, Shenzhen, Guangdong 518129 (CN); LIANG, Yueqi, Shenzhen, Guangdong 518129 (CN); WU, Hongyang, Shenzhen, Guangdong 518129 (CN)
(74) Representative: MERH-IP Matias Erny Reichl Hoffmann Patentanwälte PartG mbB
(86) International application number: PCT/CN2021/094891
(87) International publication number: WO 2021/238763

(57) **Abstract**

This application provides a route management method, device, and system, to resolve a technical problem that a route processing capability is limited by a hardware environment. In this method, a configuration distribution device may create a route processing unit in at least one route processing device when there is a route management requirement, determine a route processing unit corresponding to each to-be-processed target private network, and then send configuration information of each target private network to a corresponding route processing unit, so that the route processing unit processes a route of a corresponding target private network. In this solution, a route processing unit configured to perform route processing is created in the at least one route processing device in real time based on the route management requirement, and each route processing unit can independently complete route receiving and sending and route selection of a corresponding target private network. Therefore, a route processing capability of the entire system is not limited by a hardware environment such as a board.

## Description

### CROSS-REFERENCE TO RELATED APPLICATIONS

This application claims priority to Chinese Patent Application No. 202010448666.9, filed with the China National Intellectual Property Administration on May 25, 2020 and entitled "ROUTE MANAGEMENT METHOD, DEVICE, AND SYSTEM", which is incorporated herein by reference in its entirety.

### TECHNICAL FIELD

This application relates to the field of communication technologies, and in particular, to a route management method, device, and system.

### BACKGROUND

The border gateway protocol (border gateway protocol, BGP) can implement route selection and switching functions between different autonomous systems (autonomous systems, ASs). When the BGP protocol runs on a single router, a quantity of routes and a quantity of neighbor devices supported by the BGP protocol are severely limited due to the environment limitation of router hardware (for example, computing capabilities of a CPU and storage capabilities of a memory).

With large-scale network deployment, a quantity of routes and a quantity of neighbor devices in a communication network increase sharply. The communication network may be implemented by using a router cluster, and the router cluster includes a plurality of routers that support BGP. However, this deployment manner has great limitations in terms of actual deployment and configuration management. First, complicated deployment: Because the router hardware is inconvenient to expand, system expansion is difficult. In addition, a centralized control unit in the router cluster is still a bottleneck in improving system processing capabilities. Second, complicated configuration management: Management personnel needs to perform a configuration operation on each router in the router cluster.

It is clear that, resolving the problem of a single hardware environment limitation of a router by using the router cluster increases hardware costs and management costs.

### SUMMARY

This application provides a route management method, device, and system, to resolve a technical problem that a route processing capability is limited by a hardware environment.

According to a first aspect, an embodiment of this application provides a route management method. The method includes the following steps.

A configuration distribution device obtains configuration information of M target private networks, where M is a positive integer, and configuration information of any target private network includes information about the target private network and information about a plurality of neighbor devices in the target private network; creates N route processing units in at least one route processing device, where N is a positive integer that is less than or equal to M; determines, from the N route processing units, a route processing unit corresponding to each target private network of the M target private networks, where each target private network corresponds to only one route processing unit; and sends configuration information of each target private network to the route processing unit corresponding to each target private network.

In this method, a route processing unit configured to perform route processing is created in the at least one route processing device in real time based on a route management requirement, and each route processing unit can independently complete route receiving and sending and route selection of a corresponding target private network. Therefore, a route processing capability of the entire system is not limited by a hardware environment such as a board. In addition, the method may implement dynamic adjustment of a quantity of route processing units, to finally implement elastic scaling of a routing function.

In a possible design, the configuration distribution device may create the N route processing units in the at least one route processing device based on a quantity of the M target private networks and/or a quantity of neighbor devices in each target private network of the M target private networks.

According to the design, the configuration distribution device may create a proper quantity of route processing units based on the current quantity of target private networks and quantity of neighbor devices in each target private network.

In a possible design, the configuration distribution device may determine, from the N route processing units, the route processing unit corresponding to each target private network in the M target private networks based on the quantity of the neighbor devices in each target private network of the M target private networks. Optionally, the configuration distribution device may allocate a corresponding route processing unit to each target private network by using a common hash algorithm or a consistent hash algorithm; or the configuration distribution device may allocate a corresponding route processing unit to each target private network in a random manner. This is not limited in this application.

According to this design, load balancing of the N route processing units can be implemented.

In a possible design, the configuration distribution device may alternatively obtain configuration information of P newly added target private networks, and create Q route processing units in a route processing device, where P and Q are positive integers, and Q is less than or equal to P; the configuration distribution device determines, from the Q route processing units, a route processing unit corresponding to each target private network in the P target private networks, where each target private network corresponds to only one route processing unit; and the configuration distribution device sends the configuration information of the P target private networks to the route processing unit corresponding to each target private network.

According to this design, a configuration distribution unit may alternatively dynamically adjust a quantity of route processing units in the system based on the increase of a to-be-managed target private network, to implement dynamic expansion of a route management capability of the system. In this way, a waste of hardware resources is avoided when a difference between hardware requirements of a service peak and a stable state is large.

In a possible design, the configuration distribution device may alternatively obtain first indication information, where the first indication information includes information about a to-be-deleted first target private network; and send, based on the first indication information, second indication information to a first route processing unit corresponding to the first target private network, where the second indication information notifies a first target route processing unit to delete configuration information of the first target private network.

According to this design, the configuration distribution unit may alternatively delete the to-be-managed target private network, to reduce processing tasks of some route processing units.

In a possible design, when a target private network corresponding to the first route processing unit includes only the first target private network, the configuration distribution device may alternatively release the first route processing unit.

Because the first route processing unit is in an idle state, a resource occupied by the first route processing unit may be released by releasing the first route processing unit, to avoid a waste of resources and improve resource utilization.

In a possible design, when the target private network corresponding to the first route processing unit further includes a second target private network, if load of the first target route processing unit is less than a first threshold, the configuration distribution device may alternatively determine a second route processing unit whose load is greater than the first threshold and less than a maximum value; the configuration distribution device sends configuration information of the second target private network to the second route processing unit; and the configuration distribution device releases the first route processing unit.

According to this design, the configuration distribution device may collect processing tasks of a plurality of target route processing units, to improve resource utilization and avoid a waste of resources.

In a possible design, when determining that a software version of a third route processing unit does not meet a version condition, the configuration distribution device may create a fourth route processing unit that meets the version condition in the route processing device; the configuration distribution device sends configuration information of a third target private network corresponding to the third route processing unit to the fourth route processing unit; and the configuration distribution device releases the third route processing unit.

Because the route processing units run independently of each other, software versions of different route processing units may be different. Therefore, according to this design, the configuration distribution unit may alternatively support independent upgrade of a single route processing unit.

According to a second aspect, an embodiment of this application provides a route management method. The method is applied to a first route processing unit in a first route processing device, and the first route processing unit (or the first route processing device) may perform the following steps:
receiving configuration information of a first target private network corresponding to the first route processing unit, where the configuration information of the first target private network includes information about the first target private network and information about a plurality of first neighbor devices in the first target private network; obtaining routing information of the plurality of first neighbor devices in the first target private network; and determining optimal routing information of the first target private network based on the routing information of the plurality of first neighbor devices.

According to the method, each target private network may independently complete route receiving and sending and route selection by a route processing unit. In comparison with a plurality of times of route selection (local route selection first and then global route selection), there is no centralized control unit for implementing global route selection in the system, to prevent the centralized control unit from becoming a bottleneck of improving a processing capability of the entire system, and improve efficiency of determining an optimal route of each target private network.

In a possible design, that the first route processing unit (or the first route processing device) obtains routing information of the plurality of first neighbor devices includes:
generating first traffic attraction indication information based on the configuration information of the first target private network, where the first traffic attraction information indicates a forwarding device to forward border gateway protocol BGP route packets from the plurality of first neighbor devices to the first route processing unit (or the first route processing device), and a BGP route packet of any first neighbor device includes the routing information of the first neighbor device; notifying the forwarding device of the first traffic attraction indication information; and receiving the BGP route packets of the plurality of first neighbor devices that are forwarded by the forwarding device, and obtaining the routing information of the plurality of first neighbor devices from the BGP route packets of the plurality of first neighbor devices.

According to this design, the forwarding device may accurately forward the BGP route packet from the first neighbor device to the first route processing unit (or the first route processing device) by using the first traffic attraction indication information.

In a possible design, that the first route processing unit (or the first route processing device) notifies the forwarding device of the first traffic attraction indication information includes: storing the first traffic attraction indication information into a data storage device, so that the forwarding device obtains the first traffic attraction indication information from the data storage device.

According to this design, each route processing device interacts with the forwarding device via the data storage device, and there may be no need to use a complex communication protocol between the route processing device and the forwarding device. Therefore, this design can improve deployment flexibility of a route management system.

In a possible design, after determining the optimal routing information of the first target private network, the first route processing unit (or the first route processing device) may alternatively notify a routing table device of the optimal routing information of the first target private network, to enable the routing table device to generate a routing and forwarding entry of the first target private network.

In a possible design, that the first route processing unit (or the first route processing device) notifies a routing table device of the optimal routing information of the first target private network includes: storing the optimal routing information of the first target private network into the data storage device, to enable the routing table device to obtain the optimal routing information of the first target private network from the data storage device.

According to this manner, each route processing device interacts with the routing table device by using the data storage device, and there may be no need to use a complex communication protocol between the route processing device and the routing table device. Therefore, this manner can improve deployment flexibility of a route management system.

According to a third aspect, an embodiment of this application provides a route management system. The system includes a configuration distribution device and at least one route processing device.

The configuration distribution device has a function of performing the method provided in any one of the first aspect or the designs of the first aspect of this application.

The at least one route processing device is configured to provide a hardware resource for creating a route processing unit. A route processing device on which the route processing unit is created has a function of performing the method provided in any one of the second aspect or the designs of the second aspect.

In a possible design, the system further includes: a forwarding device.

When obtaining routing information of a plurality of first neighbor devices in a first target private network, a first route processing unit (or a first route processing device on which the first route processing unit is created) is specifically configured to: generate first traffic attraction indication information based on configuration information of the first target private network, where the first traffic attraction information indicates a forwarding device to forward border gateway protocol BGP route packets from the plurality of first neighbor devices to the first route processing unit (or the first route processing device), and a BGP route packet of any first neighbor device includes the routing information of the first neighbor device; notify the forwarding device of the first traffic attraction indication information; and receive the BGP route packets of the plurality of first neighbor devices that are forwarded by the forwarding device, and obtain the routing information of the plurality of first neighbor devices from the BGP route packets of the plurality of first neighbor devices.

The forwarding device is specifically configured to: obtain the first traffic attraction indication information; and forward the BGP route packets of the plurality of first neighbor devices to the first target route processing device based on the first traffic attraction indication information.

In a possible design, the system further includes: a first data storage device.

When notifying the forwarding device of the first traffic attraction indication information, the first route processing unit (or the first route processing device) is specifically configured to: store the first traffic attraction indication information into the first data storage device.

When obtaining the first traffic attraction indication information, the forwarding device is specifically configured to obtain the first traffic attraction indication information from the first data storage device.

In a possible design, the system further includes: a routing table device.

The first route processing unit (or the first route processing device) is further configured to: after determining optimal routing information of the first target private network, notify the routing table device of the optimal routing information of the first target private network.

The routing table device is configured to: obtain the optimal routing information of the first target private network; generate a routing and forwarding entry of the first target private network based on the optimal routing information of the first target private network; and send the routing and forwarding entry of the first target private network to the forwarding device.

The forwarding device is further configured to: receive the routing and forwarding entry of the first target private network, and forward a packet from any first neighbor device in the first target private network based on the routing and forwarding entry of the first target private network.

In a possible design, the system further includes: a second data storage device.

When notifying the routing table device of the optimal routing information of the first target private network, the first route processing device is specifically configured to: store an optimal route of the first target private network into the second data storage device.

When obtaining the optimal routing information of the first target private network, the routing table device is specifically configured to obtain the optimal routing information of the first target private network from the second data storage device.

According to a fourth aspect, an embodiment of this application provides a configuration distribution device, including units configured to perform the steps in the first aspect.

According to a fifth aspect, an embodiment of this application provides a route management device, including units configured to perform the steps in the second aspect.

According to a sixth aspect, an embodiment of this application provides a network device, including at least one processing element and at least one storage element. The at least one storage element is configured to store a program and data, and the at least one processing element is configured to read and execute the program and the data that are stored in the storage element, so that the method provided in any one of the foregoing aspects of this application is implemented.

According to a seventh aspect, an embodiment of this application further provides a computer program. When the computer program is run on a computer, the computer is enabled to perform the method provided in any one of the foregoing aspects.

According to an eighth aspect, an embodiment of this application further provides a computer-readable storage medium. The computer-readable storage medium stores a computer program, and when the computer program is executed by a computer, the computer is enabled to perform the method provided in any one of the foregoing aspects.

According to a ninth aspect, an embodiment of this application further provides a chip. The chip is configured to: read a computer program stored in a memory, and perform the method provided in any one of the foregoing aspects.

According to a tenth aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

### BRIEF DESCRIPTION OF DRAWINGS

FIG. 1 is a schematic diagram of an architecture of a communication network according to an embodiment of this application;
FIG. 2 is a schematic diagram of an architecture of an NFV according to an embodiment of this application;
FIG. 3A is a schematic diagram of an architecture of a rout management system according to an embodiment of this application;
FIG. 3B is a schematic diagram of a structure of a route processing unit according to an embodiment of this application;
FIG. 4A is a schematic flowchart of a configuration distribution procedure in which a configuration distribution unit performs distribution according to an embodiment of this application;
FIG. 4B is a schematic flowchart of obtaining a route of a neighbor device by a route processing unit according to an embodiment of this application;
FIG. 4C is a schematic flowchart of implementing packet forwarding by a rout management system according to an embodiment of this application;
FIG. 5 is a flowchart of a route management method according to an embodiment of this application;
FIG. 6 is a flowchart of another route management method according to an embodiment of this application;
FIG. 7 is a schematic diagram of an architecture of another rout management system according to an embodiment of this application;
FIG. 8 is a flowchart of still another route management method according to an embodiment of this application;
FIG. 9 is a flowchart of yet another route management method according to an embodiment of this application;
FIG. 10 is a schematic diagram of a structure of a configuration distribution device according to an embodiment of this application;
FIG. 11 is a schematic diagram of a structure of a rout management device according to an embodiment of this application; and
FIG. 12 is a schematic diagram of a structure of a network device according to an embodiment of this application.

### DESCRIPTION OF EMBODIMENTS

This application provides a route management method, device, and system, to resolve a technical problem that a route processing capability is limited by a hardware environment. The method and the device are based on a same technical concept. Because a problem-resolving principle of the method is similar to a problem-resolving principle of the device, mutual reference may be made to implementations of the method and the device, and no repeated description is provided.

In the method provided in embodiments of this application, a configuration distribution device may create a route processing unit in at least one route processing device when there is a route management requirement, determine a route processing unit corresponding to each to-be-processed target private network, and then send configuration information of each target private network to a corresponding route processing unit, so that the route processing unit processes a route of a corresponding target private network. In this solution, a route processing unit configured to perform route processing is created in the at least one route processing device in real time based on the route management requirement, and each route processing unit can independently complete route receiving and sending and route selection of a corresponding target private network. Therefore, a route processing capability of the entire system is not limited by a hardware environment such as a board. In addition, the method may implement dynamic adjustment of a quantity of route processing units, to finally implement elastic scaling of a routing function.

In the following, some terms in this application are described, to help a person skilled in the art have a better understanding.

(1) A route management device is a network device having a route management function, for example, receiving and distributing a route, and route selection. For example, the route management device may be a router, or may include a plurality of network devices with different logical functions. This is not limited in this application.

When the route management device includes a plurality of network devices, the route management device may alternatively become a route management system.

(2) A private network is generated by applying a network virtualization technology to the route management device. A plurality of private networks may be virtualized in one router, and each private network has respective information (for example, a private network identifier) and a virtual routing and forwarding table (virtual routing forwarding, VRF). VRFs of these private networks can have a route with same internet protocol (internet protocol, IP) address space. In this way, one router can provide services for a plurality of customers at the same time.

For example, the private network may be a virtual private network (virtual private network, VPN), a virtual local area network (virtual local area network, VLAN), or the like.

The route management device can use a BGP to implement route selection and switching between different private networks.

(3) A neighbor device of the route management device (for example, the router) is a peer (peer) that establishes a BGP neighbor relationship with the network device in the private network, and can send a BGP route packet to the network device. The neighbor device may be a network device such as a router, a forwarding device, or a gateway.

(4) The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

It should be noted that "a plurality of" used in this application means two or more. "At least one" means one or more.

In addition, it should be understood that in description of this application, terms such as "first" and "second" are merely used for distinguishing and description, but should not be understood as indicating or implying relative importance, or should not be understood as indicating or implying a sequence.

The following describes embodiments of this application in detail with reference to the accompanying drawings.

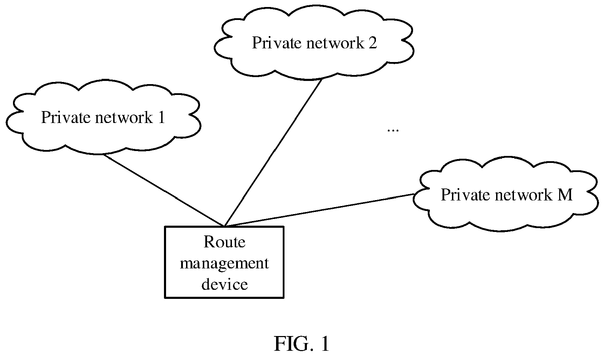

FIG. 1 shows a possible communication network to which a route management method is applicable according to an embodiment of this application. Refer to FIG. 1. In the communication network, a route management device may generate a plurality of private networks by using a network virtualization technology, for example, a private network 1, a private network 2, ..., and a private network M shown in the figure.

The route management device has a function of managing a route of a private network. The route management device may be a router or another network device, or may include a plurality of network devices with different logical functions. This is not limited in this application. The route management device can use a BGP to implement route selection and switching between different private networks.

Each private network includes a plurality of neighbor devices that establish a BGP neighbor relationship with the route management device.

The route management device mainly completes processing operations such as route receiving, route selection, and route sending. The route management device may perform route selection after receiving routing information of a neighbor device of any private network, to obtain optimal routing information of the private network. The route management device may generate a routing and forwarding entry based on the optimal routing information, to forward a packet from the private network based on the routing and forwarding entry. The route management device may alternatively send the optimal routing information to the neighbor device in the private network, so that the neighbor device in the private network may also use the optimal routing information to transmit a packet.

In this embodiment of this application, to implement elastic scaling of a route processing capability of the route management device, the route management device may be implemented by using a network function virtualization (network function virtualization, NFV) technology. Specifically, the communication network may virtualize a resource and a network function of a cloud server or at least one physical infrastructure device to obtain a virtual route management device. A network device deployed with a functional module of the virtual route management device may be referred to as a route management system.

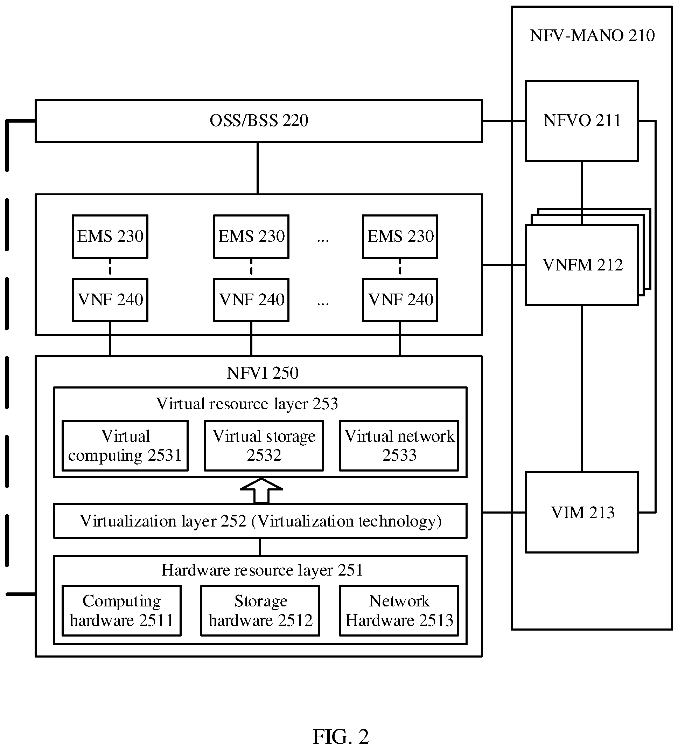

The route management system may be deployed in an NFV architecture shown in FIG. 2. As shown in FIG. 2, the NFV architecture may include: an NFV management and orchestration system (NFV management and orchestration system, NFV-MANO) 210, at least one operation support system/business support system (operation support system/business support system, OSS/BSS) 220, at least one element management system (element management system, EMS) 230, a plurality of virtualized network functions (virtualized network functions, VNFs) 240, and an NFV infrastructure (NFV infrastructure, NFVI) 250.

The NFV-MANO 210 may include an NFV orchestrator (NFVO orchestrator, NFVO) 211, one or more VNF managers (VNF managers, VNFMs) 212, and one or more virtualized infrastructure managers (virtualized infrastructure managers, VIMs) 213.

The NFVI 250 may include a hardware resource layer 251 and a virtualization layer 252 that include computing hardware 2511, storage hardware 2512, and network hardware 2513, and a virtual resource layer 253 that includes virtual computing 2531 (for example, a virtual machine or a virtual container), virtual storage 2532, and a virtual network 2533.

The computing hardware 2511 in the hardware resource layer 251 may be a dedicated processor or a general-purpose processor such as a central processing unit (Central Processing Unit, CPU) configured to provide processing and computing functions. The storage hardware 2512 such as a hard disk, a magnetic disk or network attached storage (network attached storage, NAS) is configured to provide a storage capability. The network hardware 2513 may be a gateway, a switch, a router, and/or another network device.

The virtualization layer 252 in the NFVI 250 may abstract a hardware resource in the hardware resource layer 251 as a virtual resource according to a resource virtualization technology, to implement physical hardware resource integration, and decouple the VNF 240 from a physical layer to which the hardware resource layer belongs, to provide the virtual resource for the VNF 240.

The virtual resource layer 253 may include the virtual computing 2531, the virtual storage 2532, and the virtual network 2533. The virtual resource layer 253 may form a virtual resource pool by using these virtual resources, to flexibly provide resources for the VNF 240. The virtual computing 2531 and the virtual storage 2532 may provide resources to the VNF 240 in a form of a virtual machine or another virtual container. For example, one VNF 240 includes one or more virtual machines. The virtualization layer 252 abstracts the network hardware 2513 to form the virtual network 2533. The virtual network 2533 is configured to implement communication between a plurality of virtual machines or a plurality of virtual containers of another type that bear the VNF 240. Creation of the virtual network 2533 may be implemented by using a technology such as a VLAN, a virtual private local area network service (virtual private LAN service, VPLS), a virtual extensible local area network (virtual extensible local area network, VxLAN), or network virtualization using generic routing encapsulation (network virtualization using generic routing encapsulation, NVGRE).

The OSS/BSS 220 mainly targets a telecom service operator, and provides comprehensive network management and service operation functions including network management (such as fault monitoring and network information collecting), charging management, customer service management, and the like.

The NFV-MANO 210 may be configured to implement monitoring and management on the VNF 240 and the NFVI 250.

The NFVO 211 is responsible for managing and orchestrating the NFVI 250 and software resources, and may communicate with one or more VNFMs 212 to implement a resource-related request, or send configuration information to the VNFM 212, to control the VNF 240 by using the VNFM 212, and create a plurality of network slices on the NFVI 250. In addition, the NFVO 211 may alternatively collect status information of the VNF 240 by using the VNFM 212, and communicate with the VIM 213 to implement resource allocation, and/or implement reservation and exchange of configuration information and status information of a virtualized hardware resource.

In the NFV architecture, there may be one or more VNFMs 212. Each VNFM 212 may be configured to manage one or more VNFs 240, to be specific, be responsible for life cycle management of the VNF 240 and various other management functions, for example, initializing, updating, querying, and/or terminating the VNF 240.

The VIM 213 may be configured to: control and manage interaction between the VNF 240 and the computing hardware 2511, the storage hardware 2512, the network hardware 2513, the virtual computing 2531, the virtual storage 2532, and the virtual network 2533, and manage the hardware resource and the software resource, including scaling out or scaling in a resource of a virtual machine, analyzing a fault of the NFVI 250, collecting information about the NFVI 250, and the like. For example, the VIM 213 may be configured to perform an operation of resource allocation to the VNF 240. The VNFM 212 and the VIM 213 may communicate with each other to exchange configuration and status information of a virtualized hardware resource.

The NFVI 250 includes hardware and software, and the hardware and software collectively build a virtualization environment to deploy, manage, and implement the VNF 240. In other words, the hardware resource layer 251 and the virtual resource layer 253 are configured to provide the virtual resource to the VNF 240 (for example, the virtual machine and/or the virtual container in another form).

As shown in FIG. 2, the VNFM 212 may communicate with the VNF 240 to perform life cycle management of the VNF 240 and exchange the configuration/status information.

The VNF 240 is virtualization of at least one network function. The network function may be previously provided by a physical network device. The physical network device may be a network device that can be implemented by the NFV architecture or a network device in a communication system. One VNF 240 may include one or more virtualized network function components (VNF components, VNFCs), and the VNFC may be a virtual machine or a virtual container in another form.

For example, an operator may select a plurality of VNFs 240 based on an actual service requirement and connect the plurality of VNFs 240 according to a specific rule and sequence, to form a network slice to implement the service. For another example, an operator or a user may perform division of logical functions of a network device, and generate a corresponding VNF 240 for each logical function by using a virtual resource provided by the NFVI 250. For still another example, a plurality of VNFs 240 with a same processing function are generated for a current service processing requirement of the network device, to implement elastic scaling of a processing capability of the network device.

The service, the VNF, and an infrastructure description system 260 can obtain and describe resource usage information of a service, the VNF 240, and an infrastructure.

It can be learned from the foregoing function description of each component in a system architecture of the NFV system that the VNFM 212 is configured to perform various management functions on the VNF 240, the VIM 213 is configured to control and manage interaction between the VNF 240 and another part, and the NFVO 211 is responsible for resource management of the VNF 240. Therefore, if one VNF 240 is implemented, the NFVO 211, the VNFM 212, and the VIM 213 need to work cooperatively. In this way, the NFVO 211, the VNFM 212, and the VIM 213 may communicate with each other to exchange virtualized hardware resource configuration and status information. The NFVO 211, the VNFM 212, and the VIM 213 establish a communication connection through an interface.

It should be noted that a distribution form of function units in the NFV architecture is not limited in FIG. 2. Optionally, the NFV architecture may include another function unit formed by combining the plurality of function units, for example, a function unit obtained by combining the VNFM 212 and the VIM 213.

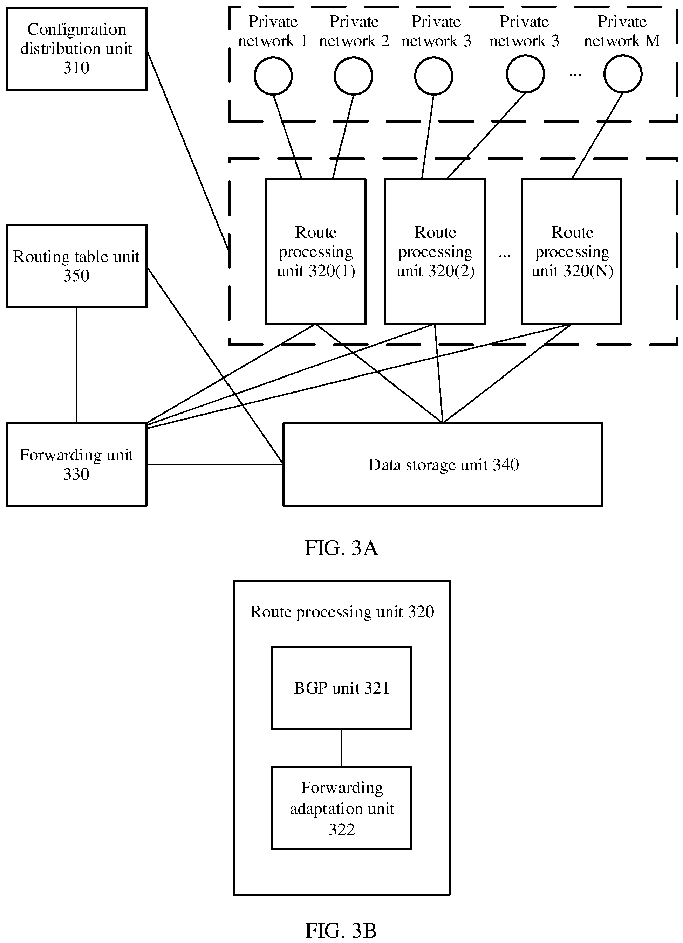

An embodiment of this application provides a route management system. The system is implemented through logical division of functions of a conventional route management device by using the NFV technology shown in FIG. 2. Refer to an architectural diagram of a route management system shown in FIG. 3A. The route management system includes a configuration distribution unit 310, a route processing unit 320, a forwarding unit 330, a data storage unit 340, and a routing table unit 350. The following describes functions of each unit module in detail.

The configuration distribution unit 310 is configured to receive configuration information of a target private network on which route management needs to be performed, and create the route processing unit 320 on a virtual machine or a virtual container by using an NFV technology based on the configuration information of the target private network; then determine a route processing unit 320 corresponding to each target private network; and then distribute the configuration information of each target private network to a corresponding route processing unit 320. Further, the configuration distribution unit 310 may alternatively perform load balancing processing on the route processing unit 320, and dynamically adjust a quantity of the route processing units 320 based on an increase or a decrease of a to-be-managed target private network, to implement dynamic scaling of a route management capability of the system. In addition, the configuration distribution unit 310 may further implement independent upgrade of a software version of a single route processing unit 320.

The route processing unit 320 is configured to obtain routing information of a plurality of neighbor devices in the target private network based on configuration information of the corresponding target private network; and perform optimal route selection based on the obtained routing information of the plurality of neighbor devices, to obtain optimal routing information of the target private network. For example, refer to FIG. 3B. Each route processing unit 320 may be further divided into two functional modules: a BGP unit 321 and a forwarding adaptation unit 322. The BGP unit 321 is mainly responsible for functions of obtaining a route and selecting a route, and the forwarding adaptation unit 322 receives a BGP route packet from a forwarding unit 330, and delivers the BGP route packet to the BGP unit 321 for processing.

The forwarding unit 330 is configured to forward a BGP route packet from a neighbor device of each target private network to the route processing unit 320 corresponding to the target private network; and obtain a routing and forwarding entry of each target private network, and forward a packet from the neighbor device of the target private network based on the routing and forwarding entry of the target private network.

A routing table unit 350 is configured to obtain optimal routing information of the target private network determined by each route processing unit, and generate the routing and forwarding entry of the target private network; and then send the generated routing and forwarding entry of each target private network to the forwarding unit 330.

A data storage unit 340 is configured to store data. Optionally, the data storage unit 340 may run in a device having a data function, such as a database or a server.

In this system, because the route processing unit 320 is created by the configuration distribution unit 310 on a virtual machine or a virtual container by using an NFV technology, the route processing unit 320 is a virtual module, and may become a route processing virtual unit or a BGP virtual unit. Optionally, the route processing unit 320 may be the VNF 240 in the NFV architecture shown in FIG. 2.

It should be noted that the configuration distribution unit 310, the routing table unit 350, or the forwarding unit 330 may also be created on a virtual machine or a virtual container by using the NFV technology, or may be an entity network device having a corresponding function. This is not limited in this application.

In addition, logical division of the foregoing units is performed based on functions of a route management device. Actually, functions of the units are implemented by a network device in which the units are located. It should be noted that different units may run in different network devices, or a plurality of units are coupled to a same network device. This is not limited in this application. For example, the foregoing units may independently run on a general-purpose server, or may run on a virtual machine of a general-purpose server.

For ease of description, in subsequent embodiments of this application, a network device running the configuration distribution unit 310 is referred to as a "configuration distribution device"; a network device running the route processing unit 320 is referred to as a "route processing device"; a network device running the routing table unit 350 is referred to as a "routing table device"; a network device running the forwarding unit 330 is referred to as a forwarding device; and the data storage unit 340 is referred to as a "data storage device".

The following describes in detail functions of each unit that are used when the route management system shown in FIG. 3A performs route management.

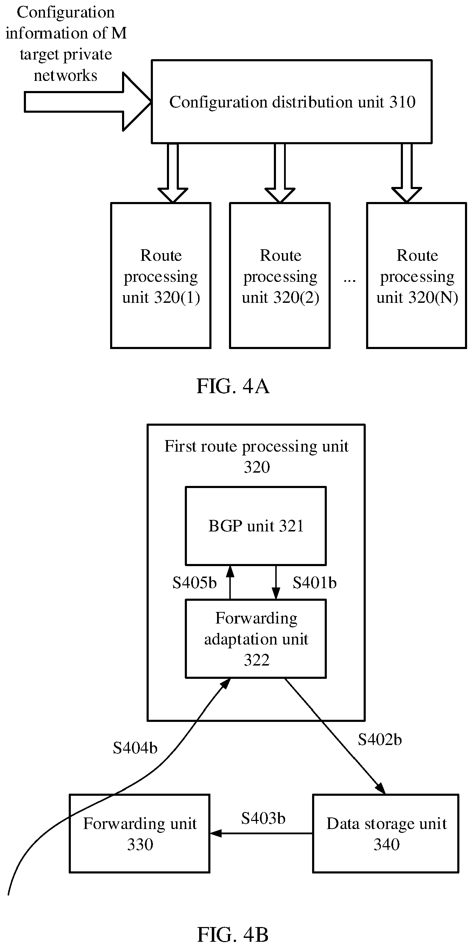

The configuration distribution unit 310 is configured to: obtain configuration information of M target private networks, where M is a positive integer, and configuration information of any target private network includes information about the target private network and information about a plurality of neighbor devices in the target private network; create N route processing units 320, where N is a positive integer, and N is less than or equal to M; determine, from the N route processing units, a route processing unit 320 corresponding to each target private network of the M target private networks, where each target private network corresponds to only one route processing unit, and any route processing unit 320 may correspond to at least one target private network; and send configuration information of each target private network to the route processing unit corresponding to each target private network. For example, for a process in which the configuration distribution unit 310 performs the foregoing steps, refer to FIG. 4A.

Optionally, the configuration distribution unit 310 may obtain configuration information of the M target private networks from another network device, or receive the configuration information of the M target private networks entered by a user through a configuration interface.

Information about any target private network may be an identifier of the target private network, and information about any neighbor device in the target private network may be a source IP address and a destination IP address of the neighbor device.

Optionally, the configuration distribution unit 310 may create N VNFs 240 in the NFV architecture shown in FIG. 2 by using the NFV technology. Each VNF 240 may be one route processing unit 320.

Because each route processing unit has a same function, the following uses any route processing unit 320 (a first route processing unit 320 for short below) created by the configuration distribution unit 310 as an example to describe the function of the route processing unit 320.

The first route processing unit 320 is configured to: receive configuration information of a first target private network corresponding to the first route processing unit 320; obtain routing information of a plurality of first neighbor devices in the first target private network based on the configuration information of the first target private network; and determine optimal routing information of the first target private network based on the obtained routing information of the plurality of first neighbor devices in the first target private network.

According to the solution, each target private network may independently complete route receiving and sending and route selection by a route processing unit 320. In comparison with a plurality of times of route selection (local route selection first and then global route selection), there is no centralized control unit for implementing global route selection in the system, to prevent the centralized control unit from becoming a bottleneck of improving a processing capability of the entire system, and improve efficiency of determining an optimal route of each target private network.

In an implementation, the configuration distribution unit 310 is specifically configured to:
create N route processing units 320 based on a quantity of the M target private networks and/or a quantity of neighbor devices in each target private network of the M target private networks.

According to the implementation, the configuration distribution unit 310 may create a proper quantity of route processing units 320 based on a current quantity of target private networks and quantity of neighbor devices in each target private network.

In an implementation, the configuration distribution unit 310 is specifically configured to:
determine, from the N route processing units 320, the route processing unit 320 corresponding to each target private network of the M target private networks based on the quantity of the neighbor devices in each target private network of the M target private networks.

For example, the configuration distribution unit 310 receives configuration information of three target private networks (a target private network 1, a target private network 2, and a target private network 3). The configuration information of the target private network 1 includes information about 500 neighbor devices, the configuration information of the target private network 2 includes information about 550 neighbor devices, and the configuration information of the target private network 3 includes information about 469 neighbor devices. In this case, the configuration distribution unit 310 may create three route processing units 320, and enable the three target private networks to correspond one-to-one to the three route processing units 320.

For another example, the configuration distribution unit 310 receives configuration information of three target private networks (a target private network 1, a target private network 2, and a target private network 3). The configuration information of the target private network 1 includes information about 500 neighbor devices, the configuration information of the target private network 2 includes information about 200 neighbor devices, and the configuration information of the target private network 3 includes information about 320 neighbor devices. In this case, the configuration distribution unit 310 may create two route processing units 320, enable the target private network 1 to correspond to one route processing unit 320, and both the target private network 2 and the target private network 3 to correspond to the other route processing unit 320.

Optionally, the configuration distribution unit 310 may allocate a corresponding route processing unit 320 to each target private network by using a common hash (hash) algorithm or a consistent hash (hash) algorithm; or the configuration distribution unit 310 may allocate a corresponding route processing unit 320 to each target private network in a random manner. This is not limited in this application.

Because a consistent hash algorithm satisfies characteristics of monotonicity and load balancing, and also satisfies decentralization of a common hash algorithm, the configuration distribution unit 310 allocates the route processing unit 320 to the target private network by using this algorithm, which can ensure load balancing of each route processing unit 320. In addition, when a to-be-processed target private network needs to be added or reduced, an amount of data migration can be minimized, thereby reducing a communication pressure and processing pressure in a system caused by data migration.

According to this implementation, load balancing of the N route processing units can be implemented.

In an implementation, when obtaining the routing information of the plurality of first neighbor devices in the first target private network based on the configuration information of the first target private network, the first route processing unit 320 is specifically configured to:
generate first traffic attraction indication information based on the configuration information of the first target private network, where the first traffic attraction information indicates a forwarding unit 330 to forward BGP route packets from the plurality of first neighbor devices to the first route processing unit 320, and a BGP route packet of any first neighbor device includes routing information of the first neighbor device;
notify the forwarding unit 330 of the first traffic attraction indication information; and
receive the BGP route packets of the plurality of first neighbor devices that are forwarded by the forwarding device, and obtain the routing information of the plurality of first neighbor devices from the BGP route packets of the plurality of first neighbor devices.

The forwarding unit 330 is further configured to:
obtain the first traffic attraction indication information; and
forward the BGP route packets of the plurality of first neighbor devices to a first target route processing unit 320 based on the first traffic attraction indication information.

Optionally, in this implementation, the first route processing unit 320 may directly send the generated first traffic attraction indication information to the forwarding unit 330. Alternatively, the first route processing unit 320 may notify the forwarding unit 330 of the generated first traffic attraction indication information by using the data storage unit 340. A specific process is as follows.

That the first route processing unit 320 notifies the forwarding unit 330 of the first traffic attraction indication information includes: storing the first traffic attraction indication information into the data storage unit 340.

That the forwarding unit 330 obtains the first traffic attraction indication information includes: obtaining the first traffic attraction indication information from the data storage unit 340.

In the foregoing manner, each route processing unit 320 interacts with the forwarding unit 330 by using the data storage unit 340, and there may be no need to use a complex communication protocol between the route processing unit 320 and the forwarding unit 330. Therefore, this manner can improve deployment flexibility of a route management system.

Optionally, in this implementation, the first traffic attraction indication information may be a correspondence between information about the first target private network, information about each first neighbor device, and an identifier of the first route processing unit 320.

For example, when an internal structure of each route processing unit is shown in FIG. 3B, the first route processing unit 320 may obtain routing information of a plurality of first neighbor devices in the first target private network by using a procedure shown in FIG. 4B.

S401b: After receiving configuration information of the first target private network, a BGP unit 321 in a first route processing unit 320 generates first traffic attraction indication information, and sends the first traffic attraction indication information to a forwarding adaptation unit 322. In this case, the first traffic attraction indication information is still incomplete, and includes information about the first target private network and information about each first neighbor device.

S402b: The forwarding adaptation unit 322 further completes the first traffic attraction indication information, and adds an identifier of the forwarding adaptation unit 322 to the first traffic attraction indication information. In this case, the first traffic attraction indication information may indicate the correspondence between information about the first target private network, information about each first neighbor device, and an identifier of the first route processing unit 320 (that is, an identifier of the forwarding adaptation unit 322). The forwarding adaptation unit 322 synchronously stores the completed first traffic attraction indication information into the data storage unit 340.

S403b: After reading/subscribing to the first traffic attraction indication information from the data storage unit 340, the forwarding unit 330 controls, based on the first traffic attraction indication information, sending of a BGP route packet.

S404b: After receiving the BGP route packet from the first neighbor device, the forwarding unit 330 matches 5-tuple information in a packet header with the first traffic attraction indication information. If the matching succeeds, the forwarding unit 330 forwards the BGP route packet to the forwarding adaptation unit 322 in the first route processing unit 320 based on the identifier of the forwarding adaptation unit 322 included in the first traffic attraction indication information.

A 5-tuple in the BGP route packet includes: a source IP address, a destination IP address, a source port, a destination port, and an identifier of a private network. It can be learned from the foregoing descriptions that the information about the first target private network in the first traffic attraction indication information is the identifier of the first target private network, and the information about the first neighbor device is a source IP address and a destination IP address of the first neighbor device. Therefore, the 5-tuple information in the BGP route packet matches the first traffic attraction indication information.

To be specific, the identifier of the private network in the 5-tuple information is the identifier of the first target private network, and a source IP address and a destination IP address in the 5-tuple information are respectively the same as a source IP address and a destination IP address of one first neighbor device in the first traffic attraction indication information.

S405b: After receiving the BGP route packet of the first neighbor device, the forwarding adaptation unit 322 sends the BGP route packet to the BGP unit 321. The BGP unit 321 may obtain routing information of the first neighbor device from the BGP route packet of the first neighbor device. After obtaining the routing information of the plurality of first neighbor devices of the first target private network, the BGP unit 321 performs route selection and determines optimal routing information of the first target private network.

In an implementation, the first route processing unit 320 is further configured to: after determining the optimal routing information of the first target private network, notify the routing table unit 350 of the optimal routing information of the first target private network.

The routing table unit 350 is configured to: obtain the optimal routing information of the first target private network; generate a routing and forwarding entry of the first target private network based on the optimal routing information of the first target private network; and send the routing and forwarding entry of the first target private network to the forwarding unit 330.

The forwarding unit 330 is further configured to: receive the routing and forwarding entry of the first target private network, and forward a packet from any first neighbor device in the first target private network based on the routing and forwarding entry of the first target private network.

In this manner, the route management system may alternatively implement a packet forwarding function.

Optionally, in this implementation, the first route processing unit 320 may directly send the optimal routing information of the first target private network to the routing table unit 350. Alternatively, the first route processing unit 320 may notify the routing table unit 350 of the optimal routing information of the first target private network by using the data storage unit 340. A specific process is as follows.

That the first route processing unit 320 notifies the routing table unit 350 of the optimal routing information of the first target private network includes: storing the optimal routing information of the first target private network into the data storage unit 340.

That the routing table unit 350 obtains the optimal routing information of the first target private network includes: obtaining the optimal routing information of the first target private network from the data storage unit 340.

In the foregoing manner, each route processing unit 320 interacts with the routing table unit 350 by using the data storage unit 340, and there may be no need to use a complex communication protocol between the route processing unit 320 and the routing table unit 350. Therefore, this manner can improve deployment flexibility of a route management system.

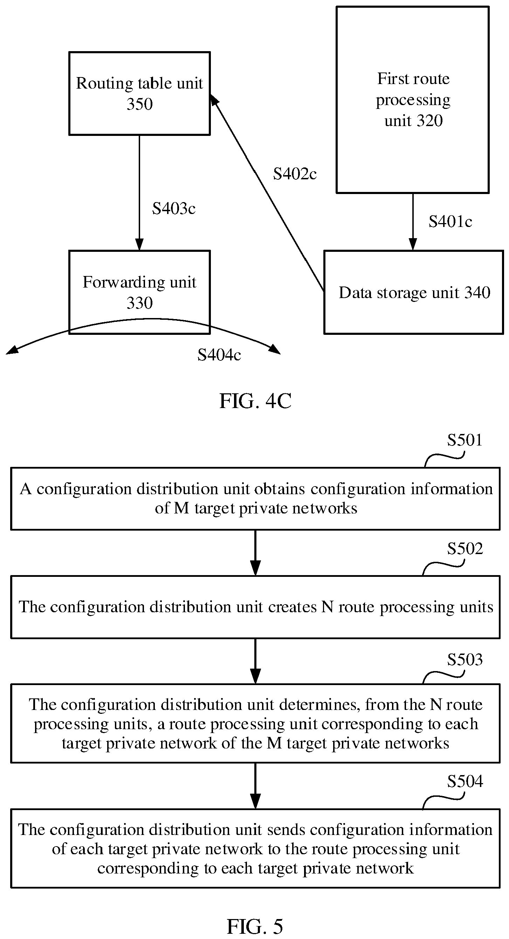

For example, the route management system may implement a packet forwarding function by using a procedure shown in FIG. 4C.

S401c: After determining optimal routing information of the first target private network, the first route processing unit 320 stores the optimal routing information of the first target private network into the data storage unit 340.

S402c: After reading/subscribing to the optimal routing information of the first target private network from the data storage unit 340, the routing table unit 350 generates a routing and forwarding entry of the first target private network.

S403c: The routing table unit 350 sends the routing and forwarding entry of the first target private network to the forwarding unit 330.

S404c: The forwarding unit 330 guides packet forwarding based on the routing and forwarding entry of the first target private network.

In this embodiment of this application, the configuration distribution unit 310 may alternatively dynamically adjust a quantity of route processing units 320 in the system based on the increase or decrease of a to-be-managed target private network, to implement dynamic scaling of a route management capability of the system. For a specific process, refer to the following implementations.

In an implementation, the configuration distribution unit 310 is further configured to:
obtain configuration information of P newly added target private networks;
create Q route processing units 320, where P and Q are positive integers, and Q is less than or equal to P; and
determine, from the Q route processing units 320, a route processing unit 320 corresponding to each target private network of the P target private networks; and send configuration information of each target private network in the configuration information of the P target private networks to the route processing unit 320 corresponding to each target private network.

The configuration distribution unit 310 may obtain the configuration information of the P target private networks from another network device, or receive the configuration information of the P target private networks entered by a user through a configuration interface.

In this implementation, for a process in which the configuration distribution unit 310 creates the Q route processing units and a process in which the configuration distribution unit 310 allocates the route processing unit 320 to each target private network in the P target private networks, refer to the descriptions in the foregoing implementation. Details are not described herein again.

In an implementation, the configuration distribution unit 310 is further configured to:
obtain first indication information, where the first indication information includes information about a to-be-deleted second target private network; and
send, based on the first indication information, second indication information to a second route processing unit 320 corresponding to the second target private network, where the second indication information notifies a second target route processing unit 320 to delete configuration information of the second target private network.

The first indication information may be obtained by the configuration distribution unit 310 from another network device, or entered by a user through a configuration interface.

Optionally, if a target private network corresponding to the second route processing unit 320 is the second target private network, the configuration distribution unit 310 is further configured to release the second route processing unit 320. In this way, because the second route processing unit 320 is in an idle state, a resource occupied by the second route processing unit 320 may be released by releasing the second route processing unit 320, to avoid a waste of resources and improve resource utilization.

Optionally, if a target private network corresponding to the second route processing unit further includes a third target private network, the configuration distribution unit 310 is further configured to:
when load of a second target route processing unit 320 is lower than a first threshold, determine a third route processing unit 320 whose load is higher than the first threshold and less than a maximum value;
send configuration information of the third target private network to the third route processing unit 320; and
release the second route processing unit 320.

The first threshold is determined by the configuration distribution unit 310, or is configured by a user. This is not limited in this application.

Because load of the second route processing unit 320 is low, utilization of a resource occupied by the second route processing unit 320 is low. By using the foregoing method, the configuration distribution unit 310 may distribute processing tasks of the second route processing unit 320 to another route processing unit 320, and release the second route processing unit 320. This further avoids a waste of resources and improves resource utilization.

In this embodiment, because each route processing unit 320 runs independently, software versions of different route processing units 320 may be different. Based on the characteristics, the configuration distribution unit 310 may further implement independent upgrade of a single route processing unit 320. For a specific process, refer to the following implementations.

In an implementation, the configuration distribution unit 310 is further configured to:
when it is determined that a software version of a fourth route processing unit 320 does not meet the version condition (for example, the software version is excessively early, or the software version is not the latest version), create a fifth route processing unit 320 that meets the version condition;
send configuration information of a fourth target private network corresponding to the fourth route processing unit 320 to the fifth route processing unit 320; and
release the fourth route processing unit 320.

This application further provides a route management method. The method is applicable to the configuration distribution unit 310 in the route management system shown in FIG. 3A. Refer to a flowchart shown in FIG. 5. The following describes in detail a route management method provided in an embodiment of this application.

S501: A configuration distribution unit obtains configuration information of M target private networks, where M is a positive integer, and configuration information of any target private network includes information about the target private network and information about a plurality of neighbor devices in the target private network.

S502: The configuration distribution unit creates N route processing units, where N is a positive integer less than or equal to M.

In an implementation, the configuration distribution unit may create the N route processing units by using the following method.

The configuration distribution unit creates the N route processing units in at least one route processing device based on a quantity of the M target private networks and/or a quantity of neighbor devices in each target private network of the M target private networks.

S503: The configuration distribution unit determines, from the N route processing units, a route processing unit corresponding to each target private network of the M target private networks, where each target private network corresponds to one route processing unit and any one of route processing units corresponds to at least one target private network.

In an implementation, the configuration distribution unit may perform S503 by using the following manner.

The configuration distribution unit determines, from the N route processing units, the route processing unit corresponding to each target private network of the M target private networks based on the quantity of the neighbor devices in each target private network of the M target private networks.

For example, the configuration distribution unit may allocate a corresponding route processing unit to each target private network by using a common hash (hash) algorithm or a consistent hash (hash) algorithm; or the configuration distribution unit may allocate a corresponding route processing unit to each target private network in a random manner. This is not limited in this application.

S504: The configuration distribution unit sends configuration information of each target private network to the route processing unit corresponding to each target private network.

In this embodiment of this application, the configuration distribution unit may alternatively dynamically adjust a quantity of route processing units in the system based on the increase or decrease of a to-be-managed target private network, to implement dynamic scaling of a route management capability of the system. For a specific process, refer to the following implementations.

In an implementation, the configuration distribution unit may alternatively increase a quantity of route processing units in a case in which a to-be-managed target private network is added by using the following steps.

The configuration distribution unit obtains configuration information of P newly added target private networks.

The configuration distribution unit creates Q route processing units, where P and Q are positive integers, and Q is less than or equal to P.

The configuration distribution unit determines, from the Q route processing units, a route processing unit corresponding to each target private network of the P target private networks.

The configuration distribution unit sends the configuration information of the P target private networks to the route processing unit corresponding to each target private network.

In an implementation, the configuration distribution unit may alternatively decrease processing tasks of some route processing units in a case in which a to-be-managed target private network is decreased by using the following steps.

The configuration distribution unit obtains first indication information, where the first indication information includes information about a to-be-deleted first target private network.

The configuration distribution unit sends, based on the first indication information, second indication information to a first route processing unit corresponding to the first target private network, where the second indication information notifies a first target route processing unit to delete configuration information of the first target private network.

Optionally, when a target private network corresponding to the first route processing unit is the first target private network, the configuration distribution unit may alternatively release the first route processing unit.

Because the first route processing unit is in an idle state, a resource occupied by the first route processing unit may be released by releasing the first route processing unit, to avoid a waste of resources and improve resource utilization.

Optionally, when a target private network corresponding to the first route processing unit further includes a second target private network, the configuration distribution unit may alternatively collect processing tasks of a plurality of target route processing units by using the following steps, to improve resource utilization and avoid a waste of resources.

When load of a first target route processing unit is lower than a first threshold, the configuration distribution unit determines a second route processing unit whose load is higher than the first threshold and less than a maximum value.

The configuration distribution unit sends configuration information of the second target private network to the second route processing unit.

The configuration distribution unit releases the first route processing unit.

In this embodiment of this application, because the route processing units run independently of each other, software versions of different route processing units may be different. Therefore, the configuration distribution unit may alternatively support independent upgrade of a single route processing unit. In an implementation, the configuration distribution unit may alternatively implement software version upgrade of a route processing unit by using the following steps.

When determining that a software version of a third route processing unit does not meet a version condition, the configuration distribution device creates a fourth route processing unit that meets the version condition.

The configuration distribution unit sends configuration information of a third target private network corresponding to the third route processing unit to the fourth route processing unit.

The configuration distribution device releases the third route processing unit.

An embodiment of this application provides a route management method. In the method, the configuration distribution unit may create a route processing unit that meets a requirement when there is a route management requirement, determine a route processing unit corresponding to each to-be-processed target private network, and then send configuration information of each target private network to a corresponding route processing unit, so that the route processing unit performs route management on the target private network corresponding to the route processing unit. In this solution, a route processing unit configured to perform route processing is created in at least one route processing device in real time based on the route management requirement, and each route processing unit can independently complete route receiving and sending and route selection of a corresponding target private network. Therefore, a route processing capability of the entire system is not limited by a hardware environment such as a board. In addition, the method may implement dynamic adjustment of a quantity of route processing units, to finally implement elastic scaling of a routing function of a route management system.

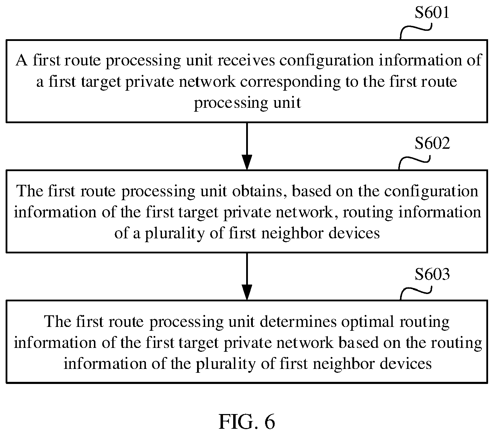

This application further provides a route management method. The method is applicable to any route processing unit 320 in the route management system shown in FIG. 3A. The following describes in detail a route management method provided in an embodiment of this application by using any route processing unit (briefly referred to as a first route processing unit below) in a system as an example and refer to a flowchart shown in FIG. 6.

S601: A first route processing unit receives configuration information of a first target private network corresponding to the first route processing unit, where the configuration information of the first target private network includes information about the first target private networks and information about a plurality of first neighbor devices in the first target private networks.

S602: The first route processing unit obtains, based on the configuration information of the first target private network, routing information of the plurality of first neighbor devices.

In an implementation, the first route processing unit may obtain the routing information of the plurality of first neighbor devices by using the following steps.

The first route processing unit generates first traffic attraction indication information based on the configuration information of the first target private network, where the first traffic attraction information indicates a forwarding unit to forward BGP route packets from the plurality of first neighbor devices to the first route processing unit, and a BGP route packet of any first neighbor device includes the routing information of the first neighbor device.

The first route processing unit notifies the forwarding unit of the first traffic attraction indication information.

The first route processing unit receives the BGP route packets of the plurality of first neighbor devices that are forwarded by the forwarding device, and obtains the routing information of the plurality of first neighbor devices from the BGP route packets of the plurality of first neighbor devices.

In this implementation, optionally, the first route processing unit may notify the forwarding unit of the first traffic attraction indication information by using the following method.

The first route processing unit stores the first traffic attraction indication information into a data storage unit, so that the forwarding unit may obtain the first traffic attraction indication information from the data storage unit.

S603: The first route processing unit determines optimal routing information of the first target private network based on the routing information of the plurality of first neighbor devices.

In this embodiment of this application, after determining the optimal routing information of the first target private network, the first route processing unit may alternatively notify a routing table unit of the optimal routin g information of the first target private network, to enable the routing table unit to generate a routing and forwarding entry of the first target private network.

Optionally, the first route processing unit may store the optimal routing information of the first target private network into the data storage unit, to enable the routing table unit to obtain the optimal routing information of the first target private network from the data storage unit.

An embodiment of this application provides a route management method. According to the method, each target private network may independently complete route receiving and sending and route selection by a route processing unit. In comparison with a plurality of times of route selection (local route selection first and then global route selection), there is no centralized control unit for implementing global route selection in the system, to prevent the centralized control unit from becoming a bottleneck of improving a processing capability of the entire system, and improve efficiency of determining an optimal route of each target private network.

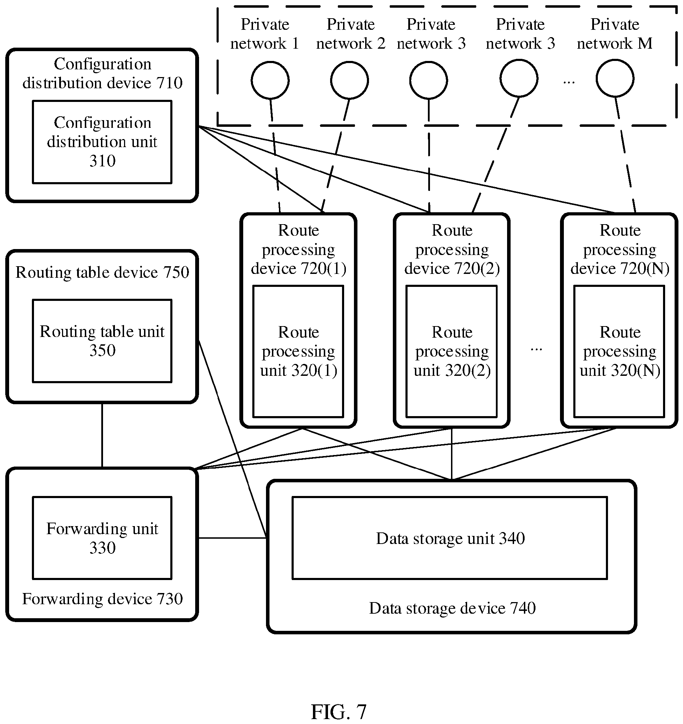

It can be learned from the foregoing descriptions of the units of the route management system shown in FIG. 3A that division of the units is performed based on logical functions. Actually, functions of the units are implemented by a network device in which the units are located. The following is described from a perspective of a network device that runs the units included in the system shown in FIG. 3A, and mutual reference may be made between implementation principles thereof. Based on the route management system shown in FIG. 3A, an embodiment of this application further provides another route management system. Refer to FIG. 7. The system may include the following network devices: a configuration distribution device 710, at least one route processing device 720, a forwarding device 730, a data storage device 740, and a routing table device 750.

A configuration distribution unit 310 is deployed in the configuration distribution device 710, and a function of the configuration distribution unit 310 can be implemented. For a specific function of the configuration distribution device 710, refer to the foregoing function descriptions of the configuration distribution unit 310. Details are not described herein again.

The at least one route processing device 720 may be used as an infrastructure, and can form a hardware resource layer in an NFV architecture, to provide computing hardware, storage hardware, and network hardware. In this way, the configuration distribution device 710 may create any route processing unit 320 in the at least one route processing device 720 by using an NFV technology. Similarly, when one or more route processing units are created inside a route processing device 720, a function of each route processing unit 320 can be implemented. For a specific function of the route processing device 720, refer to the foregoing function descriptions of the route processing unit 320. Details are not described herein again.

A forwarding unit 330 is deployed in the forwarding device 730, and a function of the forwarding unit 330 can be implemented. For a specific function of the forwarding device 730, refer to the foregoing function descriptions of the forwarding unit 330. Details are not described herein again.

A routing table unit 350 is deployed in the routing table device 750, and a function of the routing table unit 350 can be implemented. For a specific function of the routing table device 750, refer to the foregoing function descriptions of the routing table unit 350. Details are not described herein again.

A data storage unit 340 is deployed inside the data storage device 740, and a function of the data storage unit 340 can be implemented. For example, the data storage device 740 may be a database, a server, or the like.

It should be noted that the route management system shown in FIG. 7 does not constitute a limitation on a route management system to which an embodiment of this application is applicable. In addition, it should be further noted that a name of each network device in the foregoing system is not limited in this embodiment of this application either. In addition, it should be noted that the network device shown in FIG. 7 is deployed and named based on a logical function. However, actually, a plurality of units may be deployed in a same network device, or one unit may be deployed in a plurality of network devices. For example, the configuration distribution unit 310 and the routing table unit 350 are deployed in a same network device, that is, the configuration distribution device 710 and the routing table device 750 are a same network device. For another example, a route processing unit 320(1) and a route processing unit 320(2) are deployed in a same network device, that is, a route processing device 720(1) and a route processing device 720(2) are a same network device. For still another example, if the route processing unit 320(1) is deployed in a plurality of network devices, the plurality of network devices are route management devices 720.

The following describes in detail functions of each device that are used when the route management system shown in FIG. 7 performs route management.

The configuration distribution device 710 is configured to: obtain configuration information of M target private networks, where M is a positive integer, and configuration information of any target private network includes information about the target private network and information about a plurality of neighbor devices in the target private network; create N route processing units 320 in at least one route processing device 720, where N is a positive integer, and N is less than or equal to M; determine, from the N route processing units 320, a route processing unit 320 corresponding to each target private network of the M target private networks, where each target private network corresponds to only one route processing unit 320, and any route processing unit 320 may correspond to at least one target private network; and send configuration information of each target private network to the route processing unit 320 corresponding to each target private network.

Optionally, the configuration distribution device 710 may obtain configuration information of the M target private networks from another network device, or receive the configuration information of the M target private networks entered by a user through a configuration interface.

Because each route processing device 720 has a same function, the following describes the function of the route processing device 720 by using an example in which a first route processing device 720 with any route processing unit 320 (the first route processing unit 320 for short below) is created.

The first route processing device 720 that creates the first route processing unit 320 is configured to: receive configuration information of a first target private network corresponding to the first route processing unit 320; obtain routing information of a plurality of first neighbor devices in the first target private network based on the configuration information of the first target private network; and determine optimal routing information of the first target private network based on the obtained routing information of the plurality of first neighbor devices in the first target private network.

According to the solution, each target private network may independently complete route receiving and sending and route selection by a route processing unit. In comparison with a plurality of times of route selection (local route selection first and then global route selection), there is no centralized control unit for implementing global route selection in the system, to prevent the centralized control unit from becoming a bottleneck of improving a processing capability of the entire system, and improve efficiency of determining an optimal route of each target private network.

In an implementation, the configuration distribution device 710 is specifically configured to:
create the N route processing units 320 in the at least one route processing device 720 based on a quantity of the M target private networks and/or a quantity of neighbor devices in each target private network of the M target private networks.

According to the implementation, the configuration distribution device 710 may create a proper quantity of route processing units 320 based on a current quantity of target private networks and quantity of neighbor devices in each target private network.

In an implementation, the configuration distribution device 710 is specifically configured to:
determine, from the N route processing units 320, the route processing unit 320 corresponding to each target private network of the M target private networks based on the quantity of the neighbor devices in each target private network of the M target private networks.

Optionally, the configuration distribution device 710 may allocate a corresponding route processing unit 320 to each target private network by using a common hash (hash) algorithm or a consistent hash (hash) algorithm; or the configuration distribution device 710 may allocate a corresponding route processing unit 320 to each target private network in a random manner. This is not limited in this application.

In an implementation, when obtaining routing information of a plurality of first neighbor devices in the first target private network based on the configuration information of the first target private network, the first route processing device 720 is specifically configured to:
generate first traffic attraction indication information based on the configuration information of the first target private network, where the first traffic attraction information indicates the forwarding device 730 to forward border gateway protocol BGP route packets from the plurality of first neighbor devices to the first route processing device 720, and a BGP route packet of any first neighbor device includes the routing information of the first neighbor device; notify the forwarding device 730 of the first traffic attraction indication information; and receive the BGP route packets of the plurality of first neighbor devices that are forwarded by the forwarding device 730, and obtain the routing information of the plurality of first neighbor devices from the BGP route packets of the plurality of first neighbor devices.

The forwarding device 730 is specifically configured to: obtain the first traffic attraction indication information; and forward the BGP route packets of the plurality of first neighbor devices to the first target route processing device 720 based on the first traffic attraction indication information.

Optionally, in this implementation, the first route processing device 720 may directly send the generated first traffic attraction indication information to the forwarding device 730. Alternatively, the first route processing device 720 may notify the forwarding device 730 of the generated first traffic attraction indication information by using the data storage device 740. A specific process is as follows.

That the first route processing device 720 notifies the forwarding device 730 of the first traffic attraction indication information includes: storing the first traffic attraction indication information into the data storage device 740.

That the forwarding device 730 obtains the first traffic attraction indication information includes: obtaining the first traffic attraction indication information from the data storage device 740.

In the foregoing manner, each route processing device 720 interacts with the forwarding device 730 by using the data storage device 740, and there may be no need to use a complex communication protocol between the route processing device 720 and the forwarding device 730. Therefore, this manner can improve deployment flexibility of a route management system.

In an implementation, the first route processing device 720 is further configured to: after determining the optimal routing information of the first target private network, notify the routing table device 750 of the optimal routing information of the first target private network.

The routing table device 750 is configured to: obtain the optimal routing information of the first target private network; generate a routing and forwarding entry of the first target private network based on the optimal routing information of the first target private network; and send the routing and forwarding entry of the first target private network to the forwarding device 730.

The forwarding device 730 is further configured to: receive the routing and forwarding entry of the first target private network, and forward a packet from any first neighbor device in the first target private network based on the routing and forwarding entry of the first target private network.

In this manner, the route management system may alternatively implement a packet forwarding function.

Optionally, in this implementation, the first route processing device 720 may directly send the optimal routing information of the first target private network to the routing table device 750. Alternatively, the first route processing device 720 may notify the routing table device 750 of the optimal routing information of the first target private network by using the data storage device 740. A specific process is as follows.

That the first route processing device 720 notifies the routing table device 750 of the optimal routing information of the first target private network includes: storing the optimal routing information of the first target private network into the data storage device 740.

That the routing table device 750 obtains the optimal routing information of the first target private network includes: obtaining the optimal routing information of the first target private network from the data storage device 740.

In the foregoing manner, each route processing device 720 interacts with the routing table device 730 by using the data storage device 740, and there may be no need to use a complex communication protocol between the route processing device 720 and the routing table device 730. Therefore, this manner can improve deployment flexibility of a route management system.

In this embodiment of this application, the configuration distribution device 710 may alternatively dynamically adjust a quantity of route processing units 320 in the system based on the increase or decrease of a to-be-managed target private network, to implement dynamic scaling of a route management capability of the system. For a specific process, refer to the following implementations.

In an implementation, the configuration distribution device 710 is further configured to:
obtain configuration information of P newly added target private networks;
create Q route processing units 320 in at least one route processing device 720, where P and Q are positive integers, and Q is less than or equal to P; and
determine, from the Q route processing units 320, a route processing unit 320 corresponding to each target private network of the P target private networks; and send configuration information of each target private network in the configuration information of the P target private networks to the route processing unit 320 corresponding to each target private network.

The configuration distribution device 710 may obtain the configuration information of the P target private networks from another network device, or receive the configuration information of the P target private networks entered by a user through a configuration interface.

In this implementation, for a process in which the configuration distribution device 710 creates the Q route processing units and a process in which the configuration distribution device 710 allocates the route processing unit 320 to each target private network in the P target private networks, refer to the descriptions in the foregoing implementation. Details are not described herein again.

In an implementation, the configuration distribution device 710 is further configured to:
obtain first indication information, where the first indication information includes information about a to-be-deleted second target private network; and
send, based on the first indication information, second indication information to a second route processing unit 320 corresponding to the second target private network, where the second indication information notifies a second target route processing unit 320 to delete configuration information of the second target private network.

The first indication information may be obtained by the configuration distribution device 710 from another network device, or entered by a user through a configuration interface.

Optionally, when a target private network corresponding to the second route processing unit 320 is the second target private network, the configuration distribution device 710 is further configured to:
release the second route processing unit 320.

Optionally, when a target private network corresponding to the second route processing unit 320 further includes a third target private network, the configuration distribution device 710 is further configured to:
when load of the second target route processing unit 320 is lower than a first threshold, determine a third route processing unit 320 whose load is higher than the first threshold and less than a maximum value;
send configuration information of the third target private network to the third route processing unit 320; and
release the second route processing unit 320.

Because load of the second route processing unit 320 is low, utilization of a resource occupied by the second route processing unit 320 is low. By using the foregoing method, the configuration distribution device 710 may distribute processing tasks of the second route processing unit 320 to another route processing unit 320, and release the second route processing unit 320. This further avoids a waste of resources and improves resource utilization.

In this embodiment, because each route processing unit 320 runs independently, software versions of different route processing units 320 may be different. Based on the characteristics, the configuration distribution device 710 may further implement independent upgrade of a single route processing unit 320. For a specific process, refer to the following implementations.

In an implementation, the configuration distribution device 710 is further configured to:
when it is determined that a software version of a fourth route processing unit 320 does not meet a version condition, create a fifth route processing unit 320 that meets the version condition in the at least one route processing device 720;
send configuration information of a fourth target private network corresponding to the fourth route processing unit 320 to the fifth route processing unit 320; and
release the fourth route processing unit 320.

It should be noted that, in the route management system shown in FIG. 7, at least one route processing device in which the route processing unit 320 created by the configuration distribution device 710 each time is located may be completely the same, or may be completely different, or may be partially the same. This is not limited in this application.

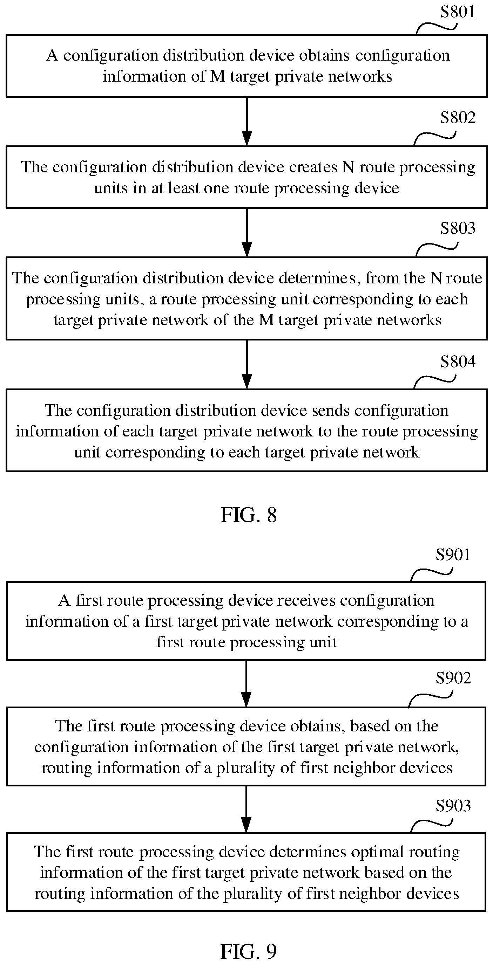

This application further provides a route management method. The method is applicable to the configuration distribution device 710 in the route management system shown in FIG. 7. Refer to a flowchart shown in FIG. 8. The following describes in detail a route management method provided in an embodiment of this application.

S801: A configuration distribution device obtains configuration information of M target private networks, where M is a positive integer, and configuration information of any target private network includes information about the target private network and information about a plurality of neighbor devices in the target private network.

S802: The configuration distribution device creates N route processing units in at least one route processing device, where N is a positive integer less than or equal to M.

In an implementation, the configuration distribution device may perform S802 by using the following method.

The configuration distribution device creates the N route processing units in the at least one route processing device based on a quantity of the M target private networks and/or a quantity of neighbor devices in each target private network of the M target private networks.

S803: The configuration distribution device determines, from the N route processing units, a route processing unit corresponding to each target private network of the M target private networks, where each target private network corresponds to one route processing unit and any one of route processing units corresponds to at least one target private network.

In an implementation, the configuration distribution device may perform S803 by using the following method.

The configuration distribution device determines, from the N route processing units, the route processing unit corresponding to each target private network of the M target private networks based on the quantity of the neighbor devices in each target private network of the M target private networks.

For example, the configuration distribution device may allocate a corresponding route processing unit to each target private network by using a common hash (hash) algorithm or a consistent hash (hash) algorithm; or the configuration distribution device may allocate a corresponding route processing unit to each target private network in a random manner. This is not limited in this application.

S804: The configuration distribution device sends configuration information of each target private network to a route processing unit corresponding to each target private network.

In this embodiment of this application, the configuration distribution device may alternatively dynamically adjust a quantity of route processing units in the system based on the increase or decrease of a to-be-managed target private network, to implement dynamic scaling of a route management capability of the system. For a specific process, refer to the following implementations.

In an implementation, the configuration distribution device may alternatively increase a quantity of route processing units in a case in which a to-be-managed target private network is added by using the following steps.

The configuration distribution device obtains configuration information of P newly added target private networks.

The configuration distribution device creates Q route processing units in the at least one route processing device, where P and Q are positive integers, and Q is less than or equal to P.

The configuration distribution device determines, from the Q route processing units, a route processing unit corresponding to each target private network of the P target private networks.

The configuration distribution device sends the configuration information of the P target private networks to a route processing unit corresponding to each target private network.

In an implementation, the configuration distribution unit may alternatively decrease processing tasks of some route processing units in a case in which a to-be-managed target private network is decreased by using the following steps.

The configuration distribution device obtains first indication information, where the first indication information includes information about a to-be-deleted first target private network.

The configuration distribution device sends, based on the first indication information, second indication information to a first route processing unit corresponding to the first target private network, where the second indication information notifies a first target route processing unit to delete configuration information of the first target private network.

Optionally, when a target private network corresponding to the first route processing unit is the first target private network, the configuration distribution device may alternatively release the first route processing unit.

Because the first route processing unit is in an idle state, a resource occupied by the first route processing unit may be released by releasing the first route processing unit, to avoid a waste of resources and improve resource utilization.

Optionally, when a target private network corresponding to the first route processing unit further includes a second target private network, the configuration distribution device may alternatively collect processing tasks of a plurality of target route processing units by using the following steps, to improve resource utilization and avoid a waste of resources.

When load of the first target route processing unit is lower than a first threshold, the configuration distribution device determines a second route processing unit whose load is higher than the first threshold and less than a maximum value.

The configuration distribution device sends configuration information of the second target private network to the second route processing unit.

The configuration distribution device releases the first route processing unit.

In this embodiment of this application, because the route processing units run independently of each other, software versions of different route processing units may be different. Therefore, the configuration distribution unit may alternatively support independent upgrade of a single route processing unit. In an implementation, the configuration distribution unit may alternatively implement software version upgrade of a route processing unit by using the following steps.

When determining that a software version of a third route processing unit does not meet a version condition, the configuration distribution device creates a fourth route processing unit that meets the version condition in the at least one route processing device.

The configuration distribution device sends configuration information of a third target private network corresponding to the third route processing unit to the fourth route processing unit.

The configuration distribution device releases the third route processing unit.

An embodiment of this application provides a route management method. In the method, the configuration distribution device may create a route processing unit that meets a requirement when there is a route management requirement, determine a route processing unit corresponding to each to-be-processed target private network, and then send configuration information of each target private network to a corresponding route processing unit, so that the route processing unit performs route management on the target private network corresponding to the route processing unit. In this solution, a route processing unit configured to perform route processing is created in the at least one route processing device in real time based on the route management requirement, and each route processing unit can independently complete route receiving and sending and route selection of a corresponding target private network. Therefore, a route processing capability of the entire system is not limited by a hardware environment such as a board. In addition, the method may implement dynamic adjustment of a quantity of route processing units, to finally implement elastic scaling of a routing function of a route management system.

This application further provides a route management method. The method is applicable to any route processing device 720 in which any route processing unit 320 is created in the route management system shown in FIG. 7. The following describes in detail a route management method provided in an embodiment of this application by using a route processing device (briefly referred to as a first route processing device below) in which a first route processing unit is created in a system as an example and refer to a flowchart shown in FIG. 9.

S901: A first route processing device receives configuration information of a first target private network corresponding to the first route processing unit, where the configuration information of the first target private network includes information about the first target private network and information about a plurality of first neighbor devices in the first target private network.

S902: The first route processing device obtains, based on the configuration information of the first target private network, routing information of the plurality of first neighbor devices.

In an implementation, the first route processing device may obtain the routing information of the plurality of first neighbor devices by using the following methods.

The first route processing device generates first traffic attraction indication information based on the configuration information of the first target private network, where the first traffic attraction information indicates a forwarding device to forward BGP route packets from the plurality of first neighbor devices to the first route processing device, and a BGP route packet of any first neighbor device includes routing information of the first neighbor device.

The first route processing device notifies the forwarding device of the first traffic attraction indication information.

The first route processing device receives the BGP route packets of the plurality of first neighbor devices that are forwarded by the forwarding device, and obtains the routing information of the plurality of first neighbor devices from the BGP route packets of the plurality of first neighbor devices.

In this implementation, optionally, the first route processing unit may notify a forwarding unit of the first traffic attraction indication information by using the following method.

The first route processing device may store the first traffic attraction indication information into a data storage device, to enable the forwarding device to obtain the first traffic attraction indication information from the data storage device.

S903: The first route processing device determines optimal routing information of the first target private network based on the routing information of the plurality of first neighbor devices.

In this embodiment of this application, after determining the optimal routing information of the first target private network, the first route processing device may alternatively notify a routing table device of the optimal routing information of the first target private network, to enable the routing table device to generate a routing and forwarding entry of the first target private network.

Optionally, the first route processing device may store the optimal routing information of the first target private network into the data storage device, to enable the routing table device to obtain the optimal routing information of the first target private network from the data storage device.

An embodiment of this application provides a route management method. According to the method, each target private network may independently complete route receiving and sending and route selection by a route processing unit. In comparison with a plurality of times of route selection (local route selection first and then global route selection), there is no centralized control unit for implementing global route selection in the system, to prevent the centralized control unit from becoming a bottleneck of improving a processing capability of the entire system, and may improve efficiency of determining an optimal route of each target private network.

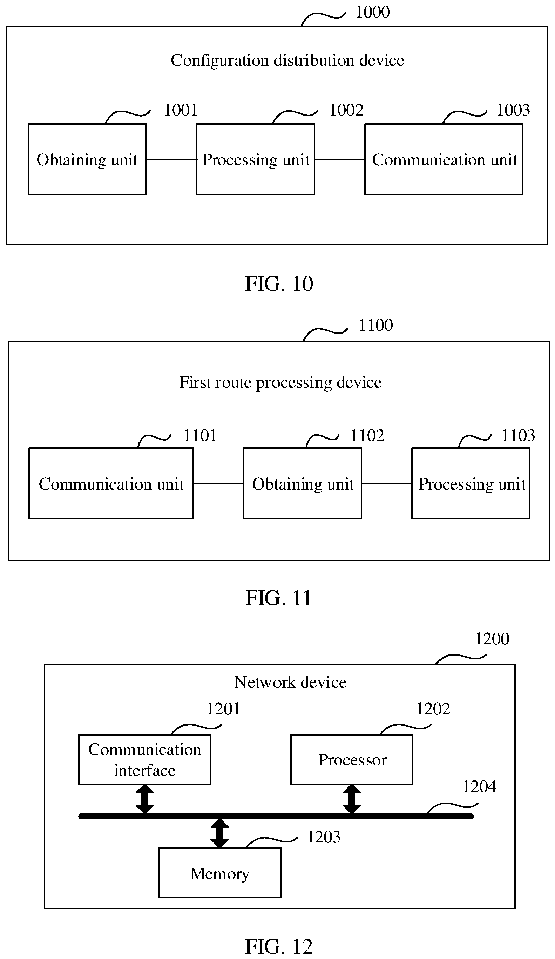

Based on a same technical concept, this application further provides a configuration distribution device. The device may be applied to the route management system shown in FIG. 3A or FIG. 7, has a function of a configuration distribution unit, and can implement the route management method performed by the configuration distribution unit or the configuration distribution device side in the foregoing embodiments. Refer to FIG. 10. A configuration distribution device 1000 includes an obtaining unit 1001, a processing unit 1002, and a communication unit 1003. The following describes functions of each unit in detail.

The obtaining unit 1001 is configured to obtain configuration information of M target private networks, where M is a positive integer, and configuration information of any target private network includes information about the target private network and information about a plurality of neighbor devices in the target private network.

The processing unit 1002 is configured to: create N route processing units in at least one route processing device, where N is a positive integer less than or equal to M; and determine, from the N route processing units, a route processing unit corresponding to each target private network of the M target private networks, where each target private network corresponds to only one route processing unit.

The communication unit 1003 is configured to send configuration information of each target private network to a route processing unit corresponding to each target private network.

In an implementation, when creating the N route processing units in the at least one route processing device, the processing unit 1002 is specifically configured to:
create the N route processing units in the at least one route processing device based on a quantity of the M target private networks and/or a quantity of neighbor devices in each target private network of the M target private networks.

In an implementation, when determining, from the N route processing units, the route processing unit corresponding to each target private network of the M target private networks, the processing unit 1002 is specifically configured to:
determine, from the N route processing units, the route processing unit corresponding to each target private network of the M target private networks based on the quantity of the neighbor devices in each target private network of the M target private networks.

In an implementation, the obtaining unit 1001 is further configured to obtain configuration information of P newly added target private networks.

The processing unit 1002 is further configured to: create Q route processing units, where P and Q are positive integers, and Q is less than or equal to P; and determine, from the Q route processing units, a route processing unit corresponding to each target private network of the P target private networks, where each target private network corresponds to only one route processing unit.

The communication unit 1003 is further configured to send the configuration information of the P target private networks to the route processing unit corresponding to each target private network.

In an implementation, the obtaining unit 1001 is further configured to obtain first indication information, where the first indication information includes information about a to-be-deleted first target private network.

The processing unit 1002 is further configured to send, by using the communication unit 1003 based on the first indication information, second indication information to a first route processing unit corresponding to the first target private network, where the second indication information notifies a first target route processing unit to delete configuration information of the first target private network.

In an implementation, when a target private network corresponding to the first route processing unit includes only the first target private network, the processing unit 1002 is further configured to:
release the first route processing unit.

In an implementation, when a target private network corresponding to the first route processing unit further includes a second target private network, the processing unit 1002 is further configured to:
when load of the first target route processing unit is lower than a first threshold, determine a second route processing unit whose load is higher than the first threshold and less than a maximum value;
send, by using the communication unit 1003, configuration information of the second target private network to the second route processing unit; and
release the first route processing unit.

In an implementation, the processing unit 1002 is further configured to:
when determining that a software version of a third route processing unit does not meet a version condition, create a fourth route processing unit that meets the version condition;
send configuration information of a third target private network corresponding to the third route processing unit to the fourth route processing unit; and
release the third route processing unit.

Based on a same technical concept, this application further provides a route processing device. The device may be applied to the route management system shown in FIG. 3A or FIG. 7. The route processing device may be used as an infrastructure, and can be used as a hardware resource layer in an NFV architecture to provide computing hardware, storage hardware, and network hardware. In this way, the configuration distribution device may create one or more route processing units in the route processing device by using an NFV technology. It is clear that, when one or more route processing units are created in the route processing device, the route processing device has functions of these route processing units at the same time, and can implement the route management method performed by the route processing unit or the route processing device side in the foregoing embodiments.

The following uses the first route processing device in which the first route processing unit is created as an example for description. Refer to FIG. 11. A first route processing device 1100 includes the following units of the first route processing unit: a communication unit 1101, an obtaining unit 1102, and a processing unit 1103. The following describes functions of each unit in detail.

The communication unit 1101 is configured to receive configuration information of a first target private network corresponding to the first route processing unit, where the configuration information of the first target private network includes information about the first target private network and information about a plurality of first neighbor devices in the first target private network.

The obtaining unit 1102 is configured to obtain routing information of the plurality of first neighbor devices in the first target private network.

The processing unit 1103 is configured to determine optimal routing information of the first target private network based on the routing information of the plurality of first neighbor devices.

In an implementation, the obtaining unit 1102 is specifically configured to:
generate first traffic attraction indication information based on the configuration information of the first target private network, where the first traffic attraction information indicates a forwarding device to forward border gateway protocol BGP route packets from the plurality of first neighbor devices to the first route processing unit, and a BGP route packet of any first neighbor device includes information of the first neighbor device;
notify the forwarding device of the first traffic attraction indication information by using the communication unit 1101; and
receive, by using the communication unit 1101, the BGP route packets of the plurality of first neighbor devices that are forwarded by the forwarding device, and obtain the routing information of the plurality of first neighbor devices from the BGP route packets of the plurality of first neighbor devices.

In an implementation, when notifying the forwarding device of the first traffic attraction indication information by using the communication unit 1101, the obtaining unit 1102 is specifically configured to:
store the first traffic attraction indication information into a data storage device by using the communication unit 1101, to enable the forwarding device to obtain the first traffic attraction indication information from the data storage device.

In an implementation, the processing unit 1103 is further configured to:
after determining the optimal routing information of the first target private network, notify a routing table device of the optimal routing information of the first target private network by using the communication unit 1101, to enable the routing table device to generate a routing and forwarding entry of the first target private network.

In an implementation, when notifying the routing table device of the optimal routing information of the first target private network by using the communication unit 1101, the processing unit 1103 is specifically configured to:
store the optimal routing information of the first target private network into the data storage device by using the communication unit 1101, to enable the routing table device to obtain the optimal routing information of the first target private network from the data storage device.

It should be noted that in the foregoing embodiments of this application, division into the modules is an example and is merely logical function division, and there may be another division manner during actual implementation. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, or an optical disc.

Based on a same technical concept, this application further provides a network device. The network device may be applied to the configuration distribution device or the route processing device in the route management system shown in FIG. 3A or FIG. 7, may implement the route management method provided in the foregoing embodiments and examples, and has functions of the device shown in FIG. 10 or FIG. 11. Refer to FIG. 12. A network device 1200 includes a communication interface 1201, a processor 1202, and a memory 1203. The communication interface 1201, the processor 1202, and the memory 1203 are connected to each other.

Optionally, the communication interface 1201, the processor 1202, and the memory 1203 are connected to each other through a bus 1204. The bus 1204 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 12, but this does not mean that there is only one bus or only one type of bus.

The communication interface 1201 is configured to receive and send data, to implement communication interaction with another device.

In an implementation, the communication device 1200 is used in a configuration distribution device, and the processor 1202 is specifically configured to:
obtain configuration information of M target private networks, where M is a positive integer, and configuration information of any target private network includes information about the target private network and information about a plurality of neighbor devices in the target private network;
create N route processing units in at least one route processing device, where N is a positive integer less than or equal to M;
determine, from the N route processing units, a route processing unit corresponding to each target private network of the M target private networks, where each target private network corresponds to only one route processing unit; and
send, by using the communication interface 1201, configuration information of each target private network to the route processing unit corresponding to each target private network.

In an implementation, the communication device 1200 is used in a route management device in which a first route processing unit is created, and the processor 1202 is specifically configured to:
receive configuration information of a first target private network corresponding to the first route processing unit by using the communication interface 1201, where the configuration information of the first target private network includes information about the first target private network and information about a plurality of first neighbor devices in the first target private network;
obtain routing information of the plurality of first neighbor devices in the first target private network; and
determine optimal routing information of the first target private network based on the routing information of the plurality of first neighbor devices.

For a specific function of the processor 1202, refer to the descriptions in the route management method provided in the foregoing embodiments, the descriptions of the specific function of the configuration distribution device in the embodiment shown in FIG. 10, and the descriptions of the specific function of the route management device in the embodiment shown in FIG. 11. Details are not described herein again.

The memory 1203 is configured to store program instructions, data, and the like. Specifically, the program instructions may include program code, and the program code includes computer operation instructions. The memory 1203 may include a random access memory (random access memory, RAM), or may include a non-volatile memory (non-volatile memory), for example, at least one magnetic disk memory. The processor 1202 executes the program instructions stored in the memory 1203, and implements the foregoing functions by using the data stored in the memory 1203, to implement the route management methods provided in the foregoing embodiments.

It may be understood that the memory 1203 in FIG. 12 of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another appropriate type.

Based on the foregoing embodiment, an embodiment of this application further provides a computer program. When the computer program is run on a computer, the computer is enabled to perform the route management method provided in the foregoing embodiment.

Based on the foregoing embodiment, an embodiment of this application further provides a computer-readable storage medium. The computer-readable storage medium stores a computer program. When the computer program is executed by a computer, the computer is enabled to perform the route management method provided in the foregoing embodiment.

The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of instructions or a data structure and can be accessed by a computer.

Based on the foregoing embodiment, an embodiment of this application further provides a chip. The chip is configured to read a computer program stored in a memory, and implement the route management method provided in the foregoing embodiment.

According to the foregoing embodiments, an embodiment of this application provides a chip system. The chip system includes a processor, configured to support a computer apparatus in implementing the functions related to the configuration distribution device or the route management device in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a route management method, device, and system, to resolve impact of a hardware environment on a processing capability of a router. In this solution, a configuration distribution device may create a route processing unit in at least one route processing device when there is a route management requirement, determine a route processing unit corresponding to each to-be-processed target private network, and then send configuration information of each target private network to a corresponding route processing unit, so that the route processing unit processes a route of a corresponding target private network. In this solution, a route processing unit configured to perform route processing is created in the at least one route processing device in real time based on the route management requirement, and each route processing unit can independently complete route receiving and sending and route selection of a corresponding target private network. Therefore, a route processing capability of the entire system is not limited by a hardware environment such as a board. In addition, the method may implement dynamic adjustment of a quantity of route processing units, to finally implement elastic scaling of a routing function.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or another programmable data processing device, so that a series of operation steps are performed on the computer or another programmable device to generate computer-implemented processing, and instructions executed on the computer or the another programmable device provide steps for implementing a function specified in one or more procedures in the flowchart and/or one or more blocks in the block diagram.

It is clear that a person skilled in the art can make various modifications and variations to this application without departing from the spirit and scope of this application. In this way, this application is intended to cover the modifications and variations of this application provided that they fall within the scope of the claims of this application and their equivalent technologies.

## Claims

1. A route management method, comprising:
obtaining, by a configuration distribution device, configuration information of M target private networks, wherein M is a positive integer, and configuration information of any target private network comprises information about the target private network and information about a plurality of neighbor devices in the target private network;
creating, by the configuration distribution device, N route processing units in at least one route processing device, wherein N is a positive integer less than or equal to M;
determining, by the configuration distribution device from the N route processing units, a route processing unit corresponding to each target private network of the M target private networks, wherein each target private network corresponds to only one route processing unit; and
sending, by the configuration distribution device, configuration information of each target private network to a route processing unit corresponding to each target private network.

2. The method according to claim 1, wherein the creating, by the configuration distribution device, N route processing units in at least one route processing device comprises:
creating, by the configuration distribution device, the N route processing units in the at least one route processing device based on a quantity of the M target private networks and/or a quantity of neighbor devices in each target private network of the M target private networks.

3. The method according to claim 1 or 2, wherein the determining, by the configuration distribution device from the N route processing units, a route processing unit corresponding to each target private network of the M target private networks comprises:
determining, by the configuration distribution device from the N route processing units, the route processing unit corresponding to each target private network in the M target private networks based on the quantity of the neighbor devices in each target private network of the M target private networks.

4. The method according to any one of claims 1 to 3, wherein the method further comprises:
obtaining, by the configuration distribution device, configuration information of P newly added target private networks;
creating, by the configuration distribution device, Q route processing units, wherein P and Q are positive integers, and Q is less than or equal to P;
determining, by the configuration distribution device from the Q route processing units, a route processing unit corresponding to each target private network of the P target private networks, wherein each target private network corresponds to only one route processing unit; and
sending, by the configuration distribution device, the configuration information of the P target private networks to a route processing unit corresponding to each target private network.

5. The method according to any one of claims 1 to 4, wherein the method further comprises:
obtaining, by the configuration distribution device, first indication information, wherein the first indication information comprises information about a to-be-deleted first target private network; and
sending, by the configuration distribution device based on the first indication information, second indication information to a first route processing unit corresponding to the first target private network, wherein the second indication information notifies a first target route processing unit to delete configuration information of the first target private network.

6. The method according to claim 5, wherein when a target private network corresponding to the first route processing unit comprises only the first target private network, the method further comprises:
releasing, by the configuration distribution device, the first route processing unit.

7. The method according to claim 5, wherein when a target private network corresponding to the first route processing unit further comprises a second target private network, the method further comprises:
when load of the first target route processing unit is lower than a first threshold, determining, by the configuration distribution device, a second route processing unit whose load is higher than the first threshold and less than a maximum value;
sending, by the configuration distribution device, configuration information of the second target private network to the second route processing unit; and
releasing, by the configuration distribution device, the first route processing unit.

8. The method according to any one of claims 1 to 7, wherein the method further comprises:
when determining that a software version of a third route processing unit does not meet a version condition, creating, by the configuration distribution device, a fourth route processing unit that meets the version condition;
sending, by the configuration distribution device, configuration information of a third target private network corresponding to the third route processing unit to the fourth route processing unit; and
releasing, by the configuration distribution device, the third route processing unit.

9. A route management method, wherein the method is applied to a first route processing unit in a first route processing device, and the method comprises:
receiving configuration information of a first target private network corresponding to the first route processing unit, wherein the configuration information of the first target private network comprises information about the first target private network and information about a plurality of first neighbor devices in the first target private network;
obtaining routing information of the plurality of first neighbor devices in the first target private network; and
determining optimal routing information of the first target private network based on the routing information of the plurality of first neighbor devices.

10. The method according to claim 9, wherein the obtaining routing information of the plurality of first neighbor devices comprises:
generating first traffic attraction indication information based on the configuration information of the first target private network, wherein the first traffic attraction information indicates a forwarding device to forward border gateway protocol BGP route packets from the plurality of first neighbor devices to the first route processing unit, and a BGP route packet of any first neighbor device comprises routing information of the first neighbor device;
notifying the forwarding device of the first traffic attraction indication information; and
receiving the BGP route packets of the plurality of first neighbor devices that are forwarded by the forwarding device, and obtaining the routing information of the plurality of first neighbor devices from the BGP route packets of the plurality of first neighbor devices.

11. The method according to claim 10, wherein the notifying the forwarding device of the first traffic attraction indication information comprises:
storing the first traffic attraction indication information into a data storage device, to enable the forwarding device to obtain the first traffic attraction indication information from the data storage device.

12. The method according to any one of claims 9 to 11, wherein after the determining optimal routing information of the first target private network, the method further comprises:
notifying a routing table device of the optimal routing information of the first target private network, to enable the routing table device to generate a routing and forwarding entry of the first target private network.

13. The method according to claim 12, wherein the notifying a routing table device of the optimal routing information of the first target private network comprises:
storing the optimal routing information of the first target private network into the data storage device, to enable the routing table device to obtain the optimal routing information of the first target private network from the data storage device.

14. A configuration distribution device, comprising:
an obtaining unit, configured to obtain configuration information of M target private networks, wherein M is a positive integer, and configuration information of any target private network comprises information about the target private network and information about a plurality of neighbor devices in the target private network;
a processing unit, configured to: create N route processing units in at least one route processing device, wherein N is a positive integer less than or equal to M; and determine, from the N route processing units, a route processing unit corresponding to each target private network of the M target private networks, wherein each target private network corresponds to only one route processing unit; and
a communication unit, configured to send configuration information of each target private network to a route processing unit corresponding to each target private network.

15. The configuration distribution device according to claim 14, wherein when creating the N route processing units in the at least one route processing device, the processing unit is specifically configured to:
create the N route processing units in the at least one route processing device based on a quantity of the M target private networks and/or a quantity of neighbor devices in each target private network of the M target private networks.

16. The configuration distribution device according to claim 14 or 15, wherein when determining, from the N route processing units, the route processing unit corresponding to each target private network of the M target private networks, the processing unit is specifically configured to:
determine, from the N route processing units, the route processing unit corresponding to each target private network of the M target private networks based on the quantity of the neighbor devices in each target private network of the M target private networks.

17. The configuration distribution device according to any one of claims 14 to 16, wherein
the obtaining unit is further configured to obtain configuration information of P newly added target private networks;
the processing unit is further configured to: create Q route processing units, wherein P and Q are positive integers, and Q is less than or equal to P, and determine, from the Q route processing units, a route processing unit corresponding to each target private network of the P target private networks, wherein each target private network corresponds to only one route processing unit; and
the communication unit is further configured to send configuration information of the P target private networks to a route processing unit corresponding to each target private network.

18. The configuration distribution device according to any one of claims 14 to 17, wherein
the obtaining unit is further configured to obtain first indication information, wherein the first indication information comprises information about a to-be-deleted first target private network; and
the processing unit is further configured to send, by using the communication unit based on the first indication information, second indication information to a first route processing unit corresponding to the first target private network, wherein the second indication information notifies a first target route processing unit to delete configuration information of the first target private network.

19. The configuration distribution device according to claim 18, wherein when a target private network corresponding to the first route processing unit comprises only the first target private network, the processing unit is further configured to:
release the first route processing unit.

20. The configuration distribution device according to claim 18, wherein when a target private network corresponding to the first route processing unit further comprises a second target private network, the processing unit is further configured to:
when load of the first target route processing unit is lower than a first threshold, determine a second route processing unit whose load is higher than the first threshold and less than a maximum value;
send, by using the communication unit, configuration information of the second target private network to the second route processing unit; and
release the first route processing unit.

21. The configuration distribution device according to any one of claims 14 to 20, wherein the processing unit is further configured to:
when determining that a software version of a third route processing unit does not meet a version condition, create a fourth route processing unit that meets the version condition;
send configuration information of a third target private network corresponding to the third route processing unit to the fourth route processing unit; and
release the third route processing unit.

22. A route processing device, wherein the route processing device comprises a first route processing unit, and the first route processing unit comprises:
a communication unit, configured to receive configuration information of a first target private network corresponding to the first route processing unit, wherein the configuration information of the first target private network comprises information about the first target private network and information about a plurality of first neighbor devices in the first target private network;
an obtaining unit, configured to obtain routing information of the plurality of first neighbor devices in the first target private network; and
a processing unit, configured to determine optimal routing information of the first target private network based on the routing information of the plurality of first neighbor devices.

23. The route processing device according to claim 22, wherein the obtaining unit is specifically configured to:
generate first traffic attraction indication information based on the configuration information of the first target private network, wherein the first traffic attraction information indicates a forwarding device to forward border gateway protocol BGP route packets from the plurality of first neighbor devices to the first route processing unit, and a BGP route packet of any first neighbor device comprises routing information of the first neighbor device;
notify the forwarding device of the first traffic attraction indication information by using the communication unit; and
receive, by using the communication unit, the BGP route packets of the plurality of first neighbor devices that are forwarded by the forwarding device, and obtain the routing information of the plurality of first neighbor devices from the BGP route packets of the plurality of first neighbor devices.

24. The route processing device according to claim 23, wherein when notifying the forwarding device of the first traffic attraction indication information by using the communication unit, the obtaining unit is specifically configured to:
store the first traffic attraction indication information into a data storage device by using the communication unit, to enable the forwarding device to obtain the first traffic attraction indication information from the data storage device.

25. The route processing device according to any one of claims 22 to 24, wherein the processing unit is further configured to:
after determining the optimal routing information of the first target private network, notify a routing table device of the optimal routing information of the first target private network by using the communication unit, to enable the routing table device to generate a routing and forwarding entry of the first target private network.

26. The route processing device according to claim 25, wherein when notifying the routing table device of the optimal routing information of the first target private network by using the communication unit, the processing unit is specifically configured to:
store the optimal routing information of the first target private network into the data storage device by using the communication unit, to enable the routing table device to obtain an optimal route of the first target private network from the data storage device.

27. A route management system, comprising a configuration distribution device and at least one route processing device, wherein
the configuration distribution device is configured to: obtain configuration information of M target private networks, wherein M is a positive integer, and configuration information of any target private network comprises information about the target private network and information about a plurality of neighbor devices in the target private network; and create N route processing units in the at least one route processing device, wherein N is a positive integer, and N is less than or equal to M; determine, from the N route processing units, a route processing unit corresponding to each target private network of the M target private networks, wherein each target private network corresponds to only one route processing unit; and send configuration information of each target private network to the route processing unit corresponding to each target private network; and
a first route processing unit created in a first route processing device is configured to: receive configuration information of a first target private network corresponding to the first route processing unit, wherein the configuration information of the first target private network comprises information about the first target private network and information about the plurality of first neighbor devices in the first target private network; obtain routing information of the plurality of first neighbor devices in the first target private network; and determine optimal routing information of the first target private network based on the obtained routing information of the plurality of first neighbor devices in the first target private network.

28. The system according to claim 27, wherein the system further comprises a forwarding device, wherein when obtaining the routing information of the plurality of first neighbor devices in the first target private network, the first route processing unit is specifically configured to: generate first traffic attraction indication information based on the configuration information of the first target private network, wherein the first traffic attraction information indicates a forwarding device to forward border gateway protocol BGP route packets from the plurality of first neighbor devices to the first route processing unit, and a BGP route packet of any first neighbor device comprises the routing information of the first neighbor device; notify the forwarding device of the first traffic attraction indication information; and receive BGP route packets of the plurality of first neighbor devices that are forwarded by the forwarding device, and obtain the routing information of the plurality of first neighbor devices from the BGP route packets of the plurality of first neighbor devices; and
the forwarding device is specifically configured to: obtain the first traffic attraction indication information; and forward the BGP route packets of the plurality of first neighbor devices to the first target route processing device based on the first traffic attraction indication information.

29. The system according to claim 28, wherein the system further comprises a first data storage device, wherein when notifying the forwarding device of the first traffic attraction indication information, the first route processing unit is specifically configured to: store the first traffic attraction indication information into the first data storage device; and
when obtaining the first traffic attraction indication information, the forwarding device is specifically configured to obtain the first traffic attraction indication information from the first data storage device.

30. The system according to claim 28 or 29, wherein the system further comprises a routing table device, wherein the first route processing unit is further configured to: after determining the optimal routing information of the first target private network, notify the routing table device of the optimal routing information of the first target private network;
the routing table device is configured to: obtain the optimal routing information of the first target private network; generate a routing and forwarding entry of the first target private network based on the optimal routing information of the first target private network; and send the routing and forwarding entry of the first target private network to the forwarding device; and
the forwarding device is further configured to: receive the routing and forwarding entry of the first target private network, and forward a packet from any first neighbor device in the first target private network based on the routing and forwarding entry of the first target private network.

31. The system according to claim 30, wherein the system further comprises a second data storage device, wherein
when notifying the routing table device of the optimal routing information of the first target private network, the first route processing unit is specifically configured to: store the optimal routing information of the first target private network into the second data storage device; and
when obtaining the optimal routing information of the first target private network, the routing table device is specifically configured to obtain the optimal routing information of the first target private network from the second data storage device.

32. A computer-readable storage medium, wherein the computer-readable storage medium stores a computer program, and when the computer program is run on a computer, the computer is enabled to implement the method according to any one of claims 1 to 13.

33. A chip, wherein the chip is configured to read a computer program stored in a memory, to implement the method according to any one of claims 1 to 13.
